# EUROPÄISCHE PATENTSCHRIFT

(11) **EP 2 828 537 B1**
(45) Veröffentlichungstag und Bekanntmachung des Hinweises auf die Patenterteilung: **30.12.2020**
(21) Anmeldenummer: 13705390.6
(22) Anmeldetag: 31.01.2013
(51) Int. Cl.: F15B 15/10, F16K 99/00, F15B 15/14, G09B 21/00

(54) **BISTABILER AKTOR, AKTORANORDNUNG, VERFAHREN ZUM AKTUIEREN UND VERWENDUNG**
BISTABLE ACTUATOR, ACTUATOR ASSEMBLY, METHOD OF ACTUATION AND USE
ACTIONNEUR BISTABLE, ENSEMBLE D'ACTIONNEURS, MÉTHODE D'ACTIONNEMENT ET UTILISATION

(30) Priorität: 23.03.2012 DE 102012005992
(43) Veröffentlichungstag der Anmeldung: 28.01.2015
(73) Patentinhaber: Karlsruher Institut für Technologie (KIT), 76131 Karlsruhe (DE)
(72) Erfinder: RAPP, Bastian, 76135 Karlsruhe (DE); NEUMANN, Christiane, 76344 Eggenstein-Leopoldshafen (DE); WILHELM, Elisabeth, 76139 Karlsruhe (DE); VOIGT, Achim, 76344 Eggenstein-Leopoldshafen (DE)
(74) Vertreter: Müller-Boré & Partner Patentanwälte PartG mbB
(86) Internationale Anmeldenummer: PCT/EP2013/000294
(87) Internationale Veröffentlichungsnummer: WO 2013/139418

(56) Entgegenhaltungen:
- WO-A1-00/22598
- US-A1- 2003 019 522
- US-A1- 2004 124 384
- US-A1- 2006 219 308
- LEVENT YOBAS ET AL: "A Novel Bulk-Micromachined Electrostatic Microvalve with a Curved-Compliant Structure Applicable for a Pneumatic Tactile Display", JOURNAL OF MICROELECTROMECHANICAL SYSTEMS, IEEE SERVICE CENTER, US, Bd. 10, Nr. 2, 1. Juni 2001 (2001-06-01), XP011034642, ISSN: 1057-7157
- Christiane Neumann: "A LARGE SCALE THERMAL MICROFLUIDIC VALVE PLATFORM", 15th International Conference on Miniaturized Systems for Chemistry and Life Sciences October 2-6, 2011, Seattle, Washington, USA, 1. Januar 2011 (2011-01-01), Seiten 428-430, XP055064259, Gefunden im Internet: URL:http://www.rsc.org/images/LOC/2011/PDF s/Papers/144_0393.pdf [gefunden am 2013-05-27]
- KWANG W OH ET AL: "TOPICAL REVIEW; A review of microvalves", JOURNAL OF MICROMECHANICS & MICROENGINEERING, INSTITUTE OF PHYSICS PUBLISHING, BRISTOL, GB, Bd. 16, Nr. 5, 1. Mai 2006 (2006-05-01), Seiten R13-R39, XP020105009, ISSN: 0960-1317, DOI: 10.1088/0960-1317/16/5/R01

## Beschreibung

Die Erfindung betrifft einen bistabilen Aktor, eine Aktoranordnung, ein Verfahren zum Aktuieren und eine Verwendung der Aktoranordnung.

Insbesondere in der Mikrosystemtechnik ist die Bereitstellung von linearen Aktorhüben von besonderer Bedeutung. Solche linearen Aktorhübe können für die präzise Positionierung von Bauteilen in der Optik, in Sensoren oder vergleichbaren Systemen zum Einsatz kommen. Die Auswahl eines geeigneten Aktors erfolgt zumeist unter Berücksichtigung von Randbedingungen, wie beispielsweise des erreichbaren Stelldruckes, des Stellweges, sowie der Positionierungsgenauigkeit.

Die Druckschrift US 2004/0124384 A1 offenbart einen pneumatischen Aktuator mit einer elastomeren Membran und einer elektrostatischen Klappventil Anordnung.

Ein elektrostatisch betriebenen Aktor ist auch in Levent Yobas et al.: "A Novel Bulk-Micromachined Electrostatic Microvalve with a Curved-Compliant Structure Applicable for a Pneumatic Tactile Display", Journal of microelecromechanical systems, IEEE Service Center, US, Bd. 10, Nr. 2, 1. Juni 2001, ISSN: 1057-7157, beschrieben.

Die Druckschrift WO 00/22598 A1 offenbart ein konfigurierbares Braille-Display mit einer Vielzahl von individuell adressierbaren Punkten. Die dabei verwendeten Aktuatoren basieren ebenfalls auf elektrostatisch betätigbare Membrane.

Die Druckschrift US 2003/019522 A1 offenbart ein Ventil zum Gebrauch in einem mikrofluiden System, wobei für die Aktuierung des Ventils eine thermisch ansprechende Substanz verwendet wird.

Die Druckschrift US 2006/219308 A1 offenbart ein Mikroventil, wobei zur Steuerung des Ventils magnetisches Wachs verwendet wird.

In der Veröffentlichung von Christiane Neumann et al.: "A large scale thermal microfluidic valve platform", 15th International Conference on Miniaturized Systems for Chemistry and Life Sciences, October 2-6, 2011, Seattle, Washington, USA, 1. Januar 2011, Seiten 428-430, ist ein thermisches mikrofluides Ventil, dessen Steuerung auf einem Phasenübergang basiert, offenbart.

Kwang W Oh et al.: "Topical review: A review of microvalves", Journal of Micromechanics and Microengineering, Institute of Physics Publishing, Bristol, GB, Bd. 16, Nr. 5, 1. Mai 2006, Seiten R13-R39, ISSN: 0960-1317, DOI: 10.1088/0960-1317/16/5/R01, offenbart einen allgemeinen Überblick über herkömmliche Mikroventile und deren Aktuationsmechanismen.

In Anwendungen innerhalb der Mikrosystemtechnik ist jedoch häufig die Frage der Skalierbarkeit bzw. der Integrationsdichte von besonderer Bedeutung. Insbesondere stellt sich für den Fachmann die Aufgabe Hunderte oder Tausende dieser Aktoren in einer Aktoranordnung bzw. einem Aktorarray anzuordnen und zu verschalten, so daß jeder der Aktoren in einfacher, energieeffizienter und zuverlässiger Weise angesteuert werden kann. Weiter ist es eine Aufgabe eine Aktoranordnung bereitzustellen, welche hochintegriert ist, das heißt, welche auf kleiner Fläche möglichst viele einzelne adressierbare Aktoren aufweist.

Die Aufgabe wird durch die Gegenstände der unabhängigen Ansprüche gelöst. Bevorzugte Ausführungsformen sind Gegenstand der abhängigen Ansprüche.

### Verfahren zum bistabilen Aktuieren eines Aktors gemäß einem Aspekt.

Ein Aspekt der Erfindung betrifft ein Verfahren zum bistabilen Aktuieren eines Aktors umfassend die Schritte:
- Anlegen eines Überdrucks in einer Aktorfluidzufuhr, welche mittels einer Aktorfluidzufuhrverbindung mit einer Aktorkammer fluidisch verbunden ist, wobei ein Arbeitsüberdruck in der Aktorkammer erzeugt wird, wodurch ein mit der Aktorkammer fluidisch verbundenes Aktorelement von einer Ruheposition in eine Aktuationsposition überführt wird;
- druckdichtes Verschließen der Aktorfluidzufuhrverwendung, so daß der Arbeitsdruck in der Aktorkammer erhalten bleibt und das Aktorelement in der Aktuationsposition verbleibt.

Vorteilhafterweise bewirkt das druckdichte Verschließen der Aktorfluidzufuhrverbindung, daß der Arbeitsdruck in der Aktorkammer unabhängig davon erhalten bleibt, ob ein Überdruck in der Aktorfluidzufuhr angelegt ist. Mit anderen Worten kann der Überdruck in der Aktorfluidzufuhr, welcher benötigt wurde, um den Arbeitsüberdruck in der Aktorkammer zu erzeugen, wodurch das Aktorelement von der Ruheposition in die Aktuationsposition überführt wurde, noch anliegen oder bereits nicht mehr anliegen. Nach dem Übergang des Aktorelements in die Aktuationsposition kann der Überdruck in der Aktorfluidzufuhr vorteilhafterweise abgelassen werden. Das bistabile Aktuieren des Aktors benötigt daher lediglich zum Wechseln der Position des Aktorelements von der Ruheposition in die Aktuationsposition Energie. Im Ruhezustand des Aktors befindet sich das Aktorelement in der Ruheposition und ist dort ohne weitere Energiezufuhr zum Aktor stabil gehalten. Im Aktuationszustand des Aktors befindet sich das Aktorelement in der Aktuationsposition und ist dort ohne weitere Energiezufuhr zum Aktor stabil gehalten. Die Ruheposition und die Aktuationsposition sind vorteilhafterweise beide ohne weitere Energiezufuhr stabil.

Der Aktor ist ein fluidischer bzw. mikrofluidischer Aktor, der mittels eines Aktorfluids, welches über die Aktorfluidzufuhr bereitgestellt wird, aktuiert wird. Das heißt, daß die Arbeitsleistung des Aktorelements durch einen Fluiddruck eines Aktorfluids, beispielsweise hydraulisch oder pneumatisch, erzeugt wird. Das Aktorfluid kann eine gasförmige Phase, eine flüssige Phase oder ein Gemisch davon umfassen. Besonders bevorzugt ist das Aktorfluid inkompressibel. Zum Aktuieren des Aktors bzw. zum Verlagern des Aktorelements in die Aktuationsposition wird in der Aktorfluidzufuhr ein Überdruck angelegt. Das Anlegen des Überdrucks in der Aktorfluidzufuhr kann umfassen, daß eine Aktorfluidquelle bereitgestellt ist, welche mit der Aktorfluidzufuhr fluidisch verbunden ist, wobei die Aktorfluidquelle das Aktorfluid mit dem gewünschten und vorbestimmten Überdruck bereitstellt. Das Bereitstellen kann hydraulisch oder pneumatisch erfolgen, beispielsweise aus einer Fluidquelle oder einem Fluidreservoir. Über die Aktorfluidzufuhrverbindung wirkt der Überdruck in der Aktorfluidzufuhr auf ein in der Aktorkammer befindliches Aktorfluid. Die Aktorkammer kann ebenfalls mit Aktorfluid oder mit einem anderen Fluid gefüllt sein. Durch den in der Aktorfluidzufuhr befindlichen Überdruck kann Aktorfluid zumindest bereichsweise in die Aktorfluidzufuhrverbindung eindringen und zumindest bereichsweise die Aktorkammer füllen. Die Aktorkammer und/oder die Aktorfluidzufuhrverbindung kann neben dem Aktorfluid ein weiteres Aktorkammerfluid enthalten, welches insbesondere inkompressibel ist.

Durch den in der Aktorfluidzufuhr wirkenden Überdruck wird bei offener Aktorfluidzufuhrverbindung ein Arbeitsüberdruck in der Aktorkammer erzeugt. Der Arbeitsüberdruck in der Aktorkammer entspricht im wesentlichen dem Überdruck in der Aktorfluidzufuhr. Mit anderen Worten entspricht der Arbeitsüberdruck mit einer Abweichung von kleiner als etwa 100 hPa bevorzugt kleiner als etwa 50 hPa dem Überdruck in der Aktorfluidzufuhr.

Das mit der Aktorkammer fluidisch verbundene Aktorelement kann durch den Arbeitsüberdruck in der Aktorkammer zumindest bereichsweise verformt bzw. verlagert werden. Insbesondere trennt das Aktorelement fluidisch die Aktorkammer von dem Äußeren des Aktors bzw. von der Atmosphäre. Beispielsweise kann das Aktorelement als verformbare Membran ausgebildet sein und zumindest bereichsweise eine Wandung der Aktorkammer ausbilden. Der Arbeitsüberdruck in der Aktorkammer beschreibt dann die Druckdifferenz zwischen dem Fluiddruck in der Aktorkammer und dem Fluiddruck bzw. Luftdruck im Äußeren des Aktors. Dementsprechend ist der Überdruck in der Aktorfluidzufuhr als die Druckdifferenz zwischen dem Fluiddruck in der Aktorfluidzufuhr und dem Fluiddruck im Äußeren des Aktors definiert. Bedingt durch den wirksamen Differenzdruck zwischen der Aktorkammer und dem Äußeren des Aktors kann das Aktorelement zumindest bereichsweise verformt bzw. verlagert werden. Die Verlagerung des Aktorelements bzw. eines Bereiches des Aktorelementes erfolgt bevorzugt linear entlang einer Aktuationsrichtung A. Bevorzugt kann das Aktorelement in genau zwei Stellzustände gebracht werden, nämlich die Ruheposition und die Aktuationsposition, wobei das Aktorelement durch ein Verlagern entlang der Aktuationsrichtung A von der Ruheposition in die Aktuationsposition überführbar ist. Eine präzisere Einstellbarkeit der Position des Aktorelements entlang der Aktuationsrichtung A ist in vielen Fällen nicht notwendig. Beispielsweise kann der Aktor Teil eines mikrofluidischen Ventils sein, welche lediglich zwei Stellzustände aufweisen, nämlich offen oder geschlossen. Beispielsweise kann ein mikrofluidischer Kanal dadurch geschlossen werden, daß das Aktorelement in der Aktuationsposition in einen mikrofluidischen Kanal hineinragt und diesen dadurch verschließt. Eine präzise Positionierung des Aktorelements entlang der Aktuationsrichtung A ist zum Öffnen und Schließen eines solchen mikrofluidischen Ventils in der Regel nicht notwendig.

Nachdem das Aktorelement von der Ruheposition in die Aktuationsposition überführt wurde, erfolgt ein druckdichtes Verschließen der Aktorfluidzufuhrverbindung. Bevorzugt wird nach dem druckdichten Verschließen der Aktorfluidzufuhrverbindung das Anlegen des Überdrucks in der Aktorfluidzufuhr beendet. Da die Aktorfluidzufuhrverbindung druckdicht verschlossen ist, bleibt der Arbeitsüberdruck in der Aktorkammer erhalten. Mit anderen Worten befindet sich der Aktor in einem stabilen Aktuationszustand, wobei sich das Aktorelement in der Aktuationsposition befindet. Insbesondere ist es vorteilhafterweise nicht notwendig, den Aktor weiter Energie, beispielsweise in Form des Überdrucks in der Aktorfluidzufuhr, zuzuführen, um den Aktor in der Aktuationsposition zu halten. Dadurch kann der Aktor vorteilhafterweise mit einem verringerten Energieaufwand betrieben werden. Der Aktuationszustand des Aktors kann auch als zweiter stabiler Zustand bezeichnet werden.

Durch ein Öffnen der Aktorfluidzufuhrverbindung kann der Arbeitsüberdruck aus der Aktorkammer durch die Aktorfluidzufuhrverbindung in Richtung der Aktorfluidzufuhr entweichen, wenn in der Aktorfluidzufuhr kein Überdruck anliegt. Das Aktorelement kann folglich entgegen der Aktuationsrichtung A verlagert werden, um in die Ruheposition (die erste stabile Position) zurückzukehren. Dazu kann das Aktorelement in einer bevorzugten Ausführungsform rückstellfähig ausgebildet sein. Alternativ oder zusätzlich kann das Aktorelement eine Rückstellvorrichtung umfassen oder mit einer Rückstellvorrichtung verbunden sein, welche eine Rückstellkraft an das Aktorelement anlegt, um dieses entgegen der Aktuierungsrichtung A zu verlagern, wenn der Arbeitsüberdruck in der Aktorkammer einen vorbestimmten Wert unterschreitet.

Gemäß einer ersten Alternative erfolgt das druckdichte Verschließen der Aktorfluidzufuhrverbindung mittels eines verflüssigbaren Verschlußmediums, welches in der Aktorfluidzufuhrverbindung angeordnet ist und in der Aktorfluidzufuhrverbindung erstarrbar ist, wobei die Aktorkammer von der Aktorfluidzufuhr durch das erstarrte Verschlußmedium fluidisch getrennt ist. Insbesondere kann das Verflüssigen bzw. Aufschmelzen und das Erstarren des Verschlußmediums wiederholbar sein bzw. mehrfach erfolgen. Insbesondere ändern sich dadurch nicht die physikalischen und/oder chemischen Eigenschaften des Verschlußmediums. Beispielhafte Verschlußmedien umfassen ein oder mehrere Alkane. Weiter bevorzugt umfaßt das Verschlußmedium Paraffin mit einer molaren Masse zwischen 270 g/Mol und etwa 600 g/Mol. Die Schmelztemperatur des Paraffins liegt dabei bevorzugt zwischen etwa 45°C und etwa 80°C, weiter bevorzugt zwischen etwa 50°C und 60°C. Die notwendige Schmelzwärme zum Aufschmelzen eines Kilogramms Paraffin liegt zwischen etwa 200 kJ und 240 kJ. Um die Aktorfluidzufuhrverbindung fluiddicht bzw. druckdicht zu verschließen, wird die Aktorfluidzufuhrverbindung derart mit dem

Verschlußmedium gefüllt, daß der gesamte Querschnitt der Aktorfluidzufuhrverbindung mit flüssigem Verschlußmedium gefüllt ist. Das Verschlußmedium kann dadurch in flüssigem Zustand gebracht bzw. gehalten werden, daß Wärme mittels eines Heizelementes dem Verschlußmedium in der Aktorfluidzufuhrverbindung zugeführt wird. Im Falle von Paraffin als Verschlußmedium ist das Verschlußmedium auf Temperaturen von über etwa 45° bzw. über etwa 80°C zu erwärmen. Das Verschlußmedium verbleibt in flüssigem Zustand solange die notwendige Wärme zugeführt wird. Wird das Heizelement abgeschaltet, so sinkt die Temperatur des Verschlußmediums aufgrund der Auskühlung über die angrenzenden Wandungen der Aktorfluidzufuhrverbindungen und das mit dem Verschlußmedium kontaktierende Aktorfluid. Unterschreitet die Temperatur des Verschlußmediums den Erstarrungspunkt bzw. die Erstarrungstemperatur von etwa 45°C, so verfestigt sich das Verschlußmedium innerhalb der Aktorfluidzufuhrverbindung, wodurch die Aktorkammer von der Aktorfluidzufuhr durch das nun feste Verschlußmedium fluidisch und druckdicht getrennt wird. Das vorangehend beschriebene Verfahren bedingt, daß der Aktor insgesamt bei einer Temperatur betrieben wird, die unterhalb der Erstarrungstemperatur des Verschlußmediums liegt. Das Verschlußmedium ist dementsprechend zu wählen. Alternativ kann das Verschlußmedium derart gewählt werden, daß das Verschlußmedium bei der Betriebstemperatur des Aktors in einem flüssigen Zustand vorliegt, so daß eine permanente Kühlung des Verschlußmediums durchgeführt werden muß, um die Aktorfluidzufuhrverbindung mittels des erstarrten Verschlußmediums druckdicht zu verschließen. Eine aktive Kühlung des Verschlußmediums in der Aktorfluidzufuhrverbindung kann beispielsweise mittels eines Peltier-Elementes als bevorzugte Wärmesenke erfolgen. Nach dem Abschalten des Kühlelements bzw. des Peltier-Elements erwärmt sich das Verschlußmedium aufgrund von Wärmezufuhr über die Wandungen der Aktorfluidzufuhrverbindung bzw. über das Aktorfluid, so daß das Verschlußmedium wieder aufschmilzt und die Aktorfluidzufuhrverbindung nicht mehr druckdicht verschlossen ist. Eine aktive Kühlung des Verschlußmediums durch ein Kühlelement bzw. ein Peltier-Element kann auch zur Verkürzung der Erstarrungszeit des Verschlußmediums genutzt werden, wenn die Erstarrungstemperatur oberhalb der

Betriebstemperatur des Aktors liegt und das Verschlußmedium daher zum Verflüssigen mittels eines Heizelementes erwärmt werden muß.

Vorzugsweise umfaßt das Verfahren den weiteren Schritt:
- Verflüssigen bzw. Schmelzen des Verschlußmediums, welches in einer Aktorfluidzufuhrverbindung zwischen einer Aktorkammer und einer Aktorfluidzufuhr angeordnet ist und die Aktorkammer von der Aktorfluidzufuhr fluidisch trennt, wobei das aufgeschmolzene Verschlußmedium beim Anlegen des Überdrucks zumindest teilweise in Richtung der Aktorkammer verlagert wird.

Besonders bevorzugt ist die Aktorfluidzufuhrverbindung derart ausgelegt, um das Verschlußmedium vollständig zu beinhalten, so daß das Verschlußmedium beim Übergang des Aktors in die Aktuationsposition nicht in die Aktorkammer eindringt. Mit anderen Worten kann das flüssige Verschlußmedium innerhalb der Aktorfluidzufuhrverbindung zwischen einer Ruheposition und einer Aktuationsposition hin und her verlagert werden in Abhängigkeit davon, ob ein Überdruck in der Aktorfluidzufuhr anliegt oder nicht. Dabei ist das Verschlußmedium innerhalb der Aktorfluidzufuhrverbindung lediglich dann verlagerbar, wenn sich das Verschlußmedium in der flüssigen Phase befindet. Dazu kann das Verschlußmedium mittels des Heizelements erwärmt werden, um von einer festen in die flüssige Phase überzugehen. Erhärtet das Verschlußmedium innerhalb der Aktorfluidzufuhrverbindung, beispielsweise da das Verschlußmedium nicht mehr mittels des Heizelements erwärmt wird, so ist das Verschlußmedium innerhalb der Aktorfluidzufuhrverbindung nicht mehr verlagerbar und die Aktorkammer von der Aktorfluidzufuhr druckdicht getrennt.

Gemäß einer zweiten Alternative kann das Verflüssigen des Verschlußmediums auch in einem Verschlußmediumreservoir statt innerhalb der Aktorfluidzufuhrverbindung erfolgen. Das Verfahren umfaßt dann die Schritte:
- Verflüssigen bzw. Schmelzen des Verschlußmediums in einem Verschlußmediumreservoir;
- Beaufschlagen des Verschlußmediumreservoirs mit einem Überdruck, wobei ein Verschlußelement von einer Offenposition in einer Geschlossenposition überführt wird, so daß die Aktorkammer von der Aktorfluidzufuhr von dem Verschlußelement fluidisch getrennt wird und
- Erstarren des Verschlußmediums, so daß das Verschlußelement in der Geschlossenposition verbleibt.

Bevorzugt ist das Verschlußelement als ein elastisch ausgebildeter Bereich der gemeinsamen Wandung des Verschlußmediumreservoirs mit der Aktorfluidzufuhrverbindung ausgebildet. Dadurch ist vorteilhafterweise das Verschlußmedium fluidisch von dem Aktorfluid bzw. dem Aktorkammerfluid getrennt. Der Überdruck zwischen dem Verschlußmediumreservoir und der Aktorfluidzufuhrverbindung beschreibt dabei eine Druckdifferenz zwischen dem Verschlußmedium innerhalb des Verschlußmediumreservoirs und dem Aktorfluid innerhalb der Aktorfluidzufuhrverbindung. Mit anderen Worten weist das Verschlußmedium einen höheren Druck auf als das Aktorfluid, so daß das Verschlußelement verformt bzw. verlagert wird. Das Verschlußelement wirkt mit anderen Worten als Ventil innerhalb der Aktorfluidzufuhrverbindung, wobei diese druckdicht verschlossen wird.

Das Verschlußmedium kann innerhalb des Verschlußmediumreservoirs mittels eines Heizelementes erwärmt und damit verflüssigt bzw. geschmolzen werden. Nach dem Abschalten des Heizelementes verliert das Verschlußmedium seine Wärme an die Umgebung, das heißt an die Wandungen des Verschlußmediumreservoirs, so daß die Erstarrungstemperatur des Verschlußmediums unterschritten wird und das Verschlußmedium erstarrt. Als bevorzugtes Verschlußmedium kann ebenfalls Paraffin eingesetzt werden.

Bevorzugt wird das Verschlußmediumreservoir mittels eines Reservoirfluids (Wasser, Druckluft und so weiter) beaufschlagt, um den Überdruck in dem Verschlußmediumreservoir zu erzeugen. Dazu kann das Verschlußmediumreservoir mittels einer Reservoirfluidzufuhrverbindung mit der Reservoirfluidzufuhr mittelbar oder unmittelbar verbunden sein. Bei einer unmittelbaren Verbindung der Reservoirfluidzufuhr mit dem Verschlußmediumreservoir können das Reservoirfluid und das Verschlußmedium miteinander kontaktieren. Bei einer mittelbaren Verbindung des Verschlußmediumreservoirs mit der Reservoirfluidzufuhr kontaktieren Reservoirfluid und Verschlußmedium nicht miteinander. Im Gegenteil sind beide beispielsweise durch eine elastische Membran voneinander getrennt. Die Reservoirfluidzufuhr ist bevorzugt mit einer Reservoirfluidquelle fluidisch verbunden, welche das Reservoirfluid mit dem notwendigen Überdruck bereitstellt.

Das Reservoirfluid sowie das Aktorfluid können zueinander identisch oder verschieden sein. Bevorzugt sind das Reservoirfluid und/oder das Aktorfluid inkompressibel. Beispielsweise kann das Reservoirfluid und/oder das Aktorfluid ein Öl, Wasser, Druckluft oder ein anderes Gas umfassen.

Vorzugsweise umfaßt das Verfahren den Schritt:
- Ablassen des Überdrucks oder Anlegen eines Unterdrucks in der Aktorfluidzufuhr.

Besonders bevorzugt wird die Aktorfluidquelle, welche die Aktorfluidzufuhr speist, nach dem Erreichen der Aktuationsposition durch den Aktor abgeschaltet, so daß der Überdruck in der Aktorfluidzufuhr entweicht. Da der Aktor bistabil ist, verbleibt dieser in der Aktuationsposition.

Vorzugsweise umfaßt das Verfahren den Schritt:
- Verflüssigen bzw. Schmelzen des Verschlußmediums in der Aktorfluidzufuhrverbindung, wobei der Arbeitsüberdruck in der Aktorkammer sinkt und das Aktorelement von der Aktuationsposition in die Ruheposition zurückkehrt.

Besonders bevorzugt wird das verflüssigte Verschlußmedium innerhalb der Aktorfluidzufuhrverbindung von der Aktorkammer weg verlagert, so daß der Druck in der Aktorkammer aufgrund der Vergrößerung des Volumens, welches dem in der Aktorkammer vorhandenen Fluids zur Verfügung steht, sinkt. Das Aktorelement wird dann entgegen der Aktuationsrichtung A verlagert und kehrt in die Ruheposition zurück. Nach dem Erreichen der Ruheposition kann das Erwärmen des Verschlußmediums beendet werden, so daß das Verschlußmedium wieder erstarrt. Das von dem Verschlußmedium aus der Aktorfluidzufuhrverbindung verdrängte Aktorfluid wird während der Rückkehr in die Ruheposition in die Aktorfluidzufuhr verdrängt. Die Aktorfluidzufuhr ist entsprechend druckfrei, um das verdrängte Aktorfluid aufzunehmen. Dazu kann die Aktorfluidzufuhr mit dem Äußeren verbunden sein und/oder ein Druckausgleichsreservoir umfassen, welches das aus der Aktorfluidzufuhrverbindung verdrängte Aktorfluid aufnimmt. Der Aktor geht somit in der stabilen Ruhezustand zurück.

### Bistabiler Aktor gemäß einem Aspekt

Ein Aspekt der Erfindung betrifft einen bistabilen Aktor umfassend:
- eine Aktorfluidzufuhr, durch welche ein Aktorfluid bereitstellbar ist und welche mittels einer Aktorfluidzufuhrverbindung mit einer Aktorkammer fluidisch verbunden ist;
- zumindest ein mit der Aktorkammer fluidisch verbundenes Aktorelement, welches durch Anlegen eines Überdrucks in der Aktorkammer von einer Ruheposition in eine Aktuationsposition überführbar ist;
- eine Verschlußvorrichtung, mit welcher die Aktorfluidzufuhrverbindung druckdicht verschließbar ist.

Bevorzugt ist die Aktorfluidzufuhr ausgelegt, daß Aktorfluid mit einem Überdruck von größer als etwa 100 hPa, bevorzugt größer als etwa 500 hPa, insbesondere größer als etwa 1000 hPa bereitzustellen. Die Aktorfluidzufuhr umfaßt weiter bevorzugt einen mikrofluidischen Kanal, welcher das Aktorfluid leitet. Der mikrofluidische Kanal weist insbesondere einen Durchmesser von weniger als etwa 5 mm, bevorzugt weniger als etwa 2 mm, besonders bevorzugt weniger als etwa 1 mm und insbesondere weniger als etwa 0,1 mm auf. Dementsprechend kann die Querschnittsfläche des mikrofluidischen Kanals, welcher die Aktorfluidzufuhr ausbildet, weniger als etwa 20 mm², bevorzugt weniger als etwa 3 mm² oder etwa 1 mm² und insbesondere weniger als etwa 0,1 mm² betragen. Ebenso kann die Aktorfluidzufuhrverbindung als mikrofluidischer Kanal ausgebildet sein, welcher dementsprechend dieselben Durchmesser bzw. Querschnittsdimension aufweist, oder jeweils um den Faktor von etwa 2, bevorzugt um ein Faktor von etwa 5 kleiner ist als etwa die Abmessungen der Aktorfluidzufuhr.

Das mit der Aktorkammer fluidisch verbundene Aktorelement ist durch das Anlegen des Überdrucks in der Aktorkammer verformbar bzw. verlagerbar. Insbesondere ist das Aktorelement entlang einer Aktuationsrichtung A linear verlagerbar. Besonders bevorzugt ist das Aktorelement als eine rückstellfähige elastische Membran ausgebildet. Insbesondere bildet die Membran bzw. das Aktorelement eine Wandung der Aktorkammer aus.

Die Verschlußvorrichtung in der Aktorfluidzufuhrverbindung wirkt als Ventil, welches die Aktorfluidzufuhr druckdicht bzw. fluiddicht verschließen kann. Die Verschlußvorrichtung kann ebenfalls einen Aktor umfassen. Beispielsweise kann die Verschlußvorrichtung als ein elastisch rückstellfähiger Bereich der Wandung der Aktorfluidzufuhrverbindung ausgebildet sein. Dieser elastisch rückstellfähige Bereich der Wandung kann verlagert bzw. derart verformt werden, beispielsweise durch einen fluidischen oder mechanischen Aktor, daß der Querschnitt der Aktorfluidzufuhrverbindung verschlossen ist.

Die Verschlußvorrichtung umfaßt ein verflüssigbares Verschlußmedium und insbesondere ein Heizelement, mit welchem das Verschlußmedium verflüssigbar ist. Gemäß einer ersten Alternative ist das Verschlußmedium in der Aktorflußzufuhrverbindung angeordnet. Weiter bevorzugt kann das Heizelement das Verschlußmedium unmittelbar oder mittelbar kontaktieren.

Vorzugsweise ist das Verschlußmedium mit dem Aktorfluid unmischbar bzw. darin unlösbar. Mit anderen Worten können unter Normalbedingungen weniger als etwa 10⁻⁶ mol/l des Aktorfluids im Verschlußmedium gelöst werden bzw. weniger als etwa 10⁻⁶ mol/l des Verschlußmediums im Aktorfluid gelöst werden. Alternativ oder zusätzlich kann das Verschlußmedium vom dem Aktorfluid durch eine elastische Membran fluidisch getrennt sein.

Gemäß einer zweiten Alternative ist das Verschlußmedium in einem Verschlußmediumreservoir angeordnet, welches fluidisch mit einem Verschlußelement verbunden ist, welches durch Anlegen eines Überdrucks im Verschlußmediumreservoir von einer Offenposition in eine Geschlossenposition überführbar ist, so daß die Aktorkammer von der Aktorfluidzufuhr durch das Verschlußelement fluidisch trennbar ist.

Besonders bevorzugt ist das Verschlußelement als elastisch rückstellfähig ausgebildeter Bereich der Wandung der Aktorfluidzufuhrverbindung ausgebildet. Durch Anlegen des Überdrucks im Verschlußmediumreservoir kann das elastisch rückstellfähig ausgebildete Verschlußelement insbesondere derart verformt bzw. verlagert werden, daß sich die Wandung der Aktorfluidzufuhrverbindung im Bereich des Verschlußelements derart verformt, daß die Aktorfluidzufuhrverbindung verschlossen ist. Das Verschlußmedium kann insbesondere eine inkompressible Flüssigkeit, wie beispielsweise flüssiges Paraffin, sein. Zum Verschließen der Aktorfluidzufuhrverbindung kann das Verschlußmediumreservoir mittels des Heizelements erwärmt werden, so daß das darin enthaltene Verschlußmedium aufgeschmolzen wird bzw. flüssig wird. Durch Anlegen eines Überdrucks in dem Verschlußmediumreservoir kann das Verschlußmedium auf das Verschlußelement wirken, so daß sich dieses verlagert bzw. verformt. Durch das Verformen bzw. Verlagern des Verschlußelementes gelangt dieses in die Geschlossenposition, wobei die Aktorfluidzufuhrverbindung fluiddicht bzw. druckdicht verschlossen wird. Nach dem Erreichen der Geschlossenposition kann das Heizelement abgeschaltet werden, so daß das Verschlußmedium innerhalb des Verschlußmediumreservoirs erstarrt, und das Verschlußelement daran gehindert ist, sich rückzustellen, um in die Offenposition zurückzukehren.

Da das Verschlußelement in der Geschlossenposition die Aktorfluidzufuhrverbindung druckdicht verschließt, verweilt auch das Aktorelement in seiner Position, gleichgültig, ob dies die Ruheposition oder die Aktuationsposition ist.

Vorzugsweise umfaßt der Aktor eine Reservoirfluidzufuhr, welche mittels einer Reservoirfluidzufuhrverbindung mit dem Verschlußmediumreservoir fluidisch verbunden ist. Mittels der Reservoirfluidzufuhr kann ein Überdruck in dem Verschlußmediumreservoir erzeugt werden. Dazu ist die Reservoirfluidzufuhr bevorzugt mit einer Reservoirfluidquelle verbunden, welche ein Reservoirfluid mit dem notwendigen Überdruck bereitstellt, so daß das Reservoirfluid den Überdruck über die Reservoirfluidzufuhrverbindung in dem Verschlußmediumreservoir erzeugen kann. Dabei kann das Reservoirfluid mit dem in dem Verschlußmediumreservoir enthaltenen Verschlußmedium mittelbar oder unmittelbar kontaktieren. Insbesondere kann die Reservoirfluidzufuhrverbindung eine verformbare Wandung umfassen, welche durch einen Überdruck in der Reservoirfluidzufuhr verformbar ist. Die Verformung dieser Wandung in der Reservoirfluidzufuhrverbindung kann elastisch und/oder plastisch erfolgen. Dieser verformbare Bereich der Wandung bildet bevorzugt zumindest bereichsweise die Wandung des Verschlußmediumreservoirs aus, so daß eine Verformung der Wandung einen Überdruck in dem Verschlußmediumreservoir erzeugt. Die Reservoirfluidzufuhr kann ebenfalls als mikrofluidischer Kanal mit den entsprechenden Abmessungen ausgebildet sein. Insbesondere können die Reservoirfluidzufuhr und die Aktorfluidzufuhr innerhalb einer, bevorzugt ein und derselben, Schicht ausgebildet sein. Diese Schicht ist bevorzugt aus einem Kunststoff, beispielsweise einem Elastomer oder einem Polymer, ausgebildet. Insbesondere ist die Schicht, in welcher die mikrofluidischen Kanäle ausgebildet sind, starr genug, um beim Anlegen eines Überdrucks in der Reservoirfluidzufuhr bzw. Aktorfluidzufuhr nicht zu verformen.

### Aktoranordnung gemäß einem Aspekt

Ein Aspekt der Erfindung betrifft eine Aktoranordnung mit zumindest zwei erfindungsgemäßen Aktoren, wobei die Fluidzufuhren der Aktoren fluidisch miteinander verbunden sind. Es versteht sich, daß auch 3, 4, 5, 6, 7, 8 oder mehr Aktoren zu einer Aktoranordnung zusammengefaßt werden können. Besonders bevorzugt können die Aktoren in einer rechteckigen Anordnung zu Feldern von zweimal zwei, dreimal drei, zweimal drei, ..., n mal m Aktoren angeordnet werden, wobei n und m beliebige natürliche Zahlen sind. Weiter bevorzugt sind die m Aktoren entlang einer Richtung x äquidistant angeordnet. Weiter bevorzugt sind die n Aktoren entlang einer Richtung y äquidistant beabstandet voneinander angeordnet, insbesondere stehen die Richtungen x und y senkrecht zueinander. Vorteilhafterweise können in beliebiger Anordnungen von beliebig vielen Aktoren gebildet werden, wobei die Aktoren gemeinsam von einer gemeinsamen Aktorfluidquelle gespeist werden können, da die Aktorfluidzufuhren untereinander fluidisch verbunden sind. Weiter bevorzugt können die Aktoren jeweils eine Reservoirfluidzufuhr aufweisen, wobei die Reservoirfluidzufuhren der Aktoren untereinander fluidisch verbunden sind und insbesondere mit einer gemeinsamen Reservoirfluidquelle verbunden sind. Weiter bevorzugt werden die Aktoren der Aktoranordnung von einer einzigen Systemsteuerung angesteuert. Das heißt, daß die Systemsteuerung die Heizelemente der Aktoren sowie die Aktorfluidquelle und gegebenenfalls die Reservoirfluidquelle steuert.

### Verwendung gemäß einem Aspekt

Ein Aspekt der Erfindung betrifft eine Verwendung einer erfindungsgemäßen Aktoranordnung als haptische Anzeigevorrichtung, wobei mittels der Aktorelemente der Aktoranordnung eine Vielzahl von ertastbaren Zeichen darstellbar ist. Insbesondere können die Aktoren verwendet werden um Zeichen in Blindenschrift darzustellen. Beispielsweise können die Aktoren zu Gruppen von dreimal zwei Aktoren angeordnet sein, wodurch jeweils ein Buchstabe in Braille-Schrift darstellbar ist. Eine Mehrzahl solcher Gruppen kann zu einer Zeile angeordnet werden. Weiter können mehrere Zeilen untereinander ausgebildet sein, so daß eine Anzahl von 40, 60, 80, 120, 200, 300, 400, 600, 960 oder mehr Zeichen gleichzeitig darstellbar ist. Die Aktoren bilden durch ihre Aktorelemente in der Aktuationsposition jeweils eine punktförmige Ausbuchtung einer Oberfläche der Anzeigevorrichtung, welche von einem Nutzer ertastbar ist. Vorteilhafterweise können Inhalte in Blindenschrift durch die bistabilen Aktoren in energieeffizienter Weise dargestellt werden, da zum Aufrechterhalten eines Schriftbildes keine Energie mehr notwendig ist. Eine Energiezufuhr ist erst notwendig, wenn das Schriftbild der Anzeigevorrichtung geändert werden soll.

### Figurenbeschreibung

Nachfolgend werden bevorzugte Ausführungsformen der vorliegenden Erfindung anhand der beigefügten Zeichnungen beispielhaft erläutert, wobei einzelne Merkmale losgelöst voneinander beliebig zu neuen Ausführungsformen kombiniert werden können. Es zeigen
- Figur 1:: Schnittansichten durch eine bevorzugte Ausführungsform eines bistabilen Aktors in sechs verschiedenen Zuständen i bis vi;
- Figur 2:: Schnittansichten durch eine weitere bevorzugte Ausführungsform eines bistabilen Aktors in acht verschiedenen Zuständen i bis viii
- Figur 3:: Schnittansichten durch eine weitere bevorzugte Ausführungsform eines bistabilen Aktors in sechs verschiedenen Zuständen i bis vi;
- Figur 4: eine weitere bevorzugte Ausführungsform des Aktors;
- Figur 5: eine weitere bevorzugte Ausführungsform des Aktors;
- Figur 6: eine weitere bevorzugte Ausführungsform des Aktors.

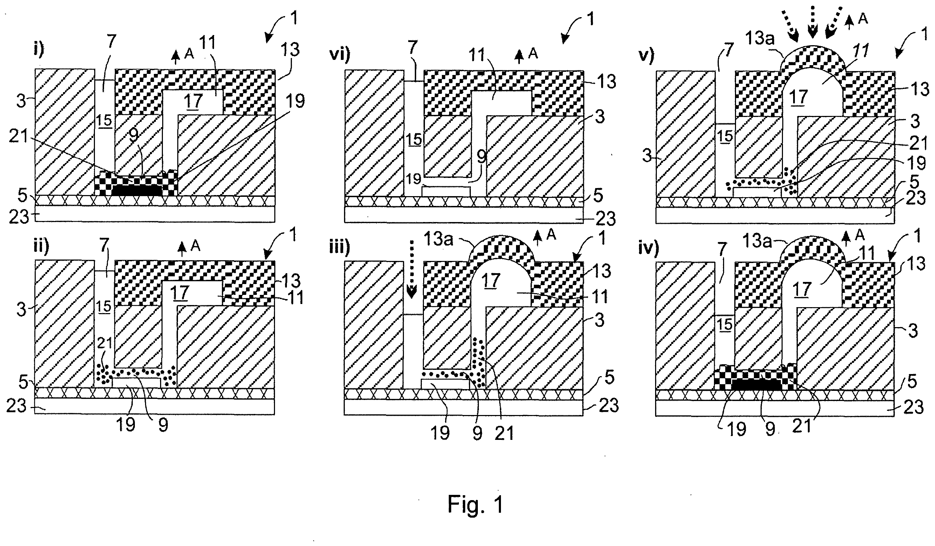

Die **Figur 1** zeigt einen Aktor in sechs verschiedenen Zuständen i bis vi. Die Figur 1i zeigt den Aktor 1 in einem Ruhezustand. Der Aktor 1 ist als mikrofluidischer Aktor ausgebildet, welcher einen starren Volumenkörper 3 umfaßt, der auf einem planaren Substrat 5 angeordnet ist. In dem Volumenkörper 3 des Aktors 1 sind eine Aktorfluidzufuhr 7, eine Aktorfluidzufuhrverbindung 9 und eine Aktorkammer 11 ausgebildet. Die Wandung der Aktorkammer 11 ist dabei bereichsweise durch eine Elastomermembran 13 ausgebildet, welche an dem Volumenkörper 3 befestigt ist, beispielsweise durch Kleben oder Laminieren.

Die Aktorfluidzufuhr 7 und die Aktorfluidzufuhrverbindung 9 sind als mikrofluidische Kanäle ausgebildet. Mit anderen Worten weisen die Aktorfluidzufuhr 7 und/oder die Aktorfluidzufuhrverbindung 9 einen Durchmesser von weniger als 1 mm, bevorzugt weniger als 100 µm und insbesondere einen Durchmesser von etwa 10 µm bis etwa 50 µm auf. Das Volumen der Aktorkammer 11 liegt dementsprechend in einem Bereich von etwa 0,01 mm³ bis etwa 2 mm³. Bei einem betriebsgemäßen Gebrauch des Aktors 1 ist die Aktorfluidzufuhr 7 mit einem Aktorfluid 15 gefüllt und mit einer Aktorfluidquelle (nicht gezeigt) fluidisch verbunden, um einen Überdruck in der Aktorfluidzufuhr 7 bereitstellen zu können. Die Aktorkammer 11 ist bei betriebsgemäßem Gebrauch mit einem Aktorkammerfluid 17 gefüllt, welches von dem Aktorfluid 15 in der Aktorfluidzufuhr 7 verschieden oder damit identisch sein kann. Da beim betriebsgemäßen Gebrauch des Aktors 1 in der Aktorfluidzufuhr 7, in der Aktorfluidzufuhrverbindung 9 sowie in der Aktorkammer 11 ein Überdruck anliegen kann, ist der Volumenkörper 3 des Aktors 1 derart mechanisch starr ausgebildet, daß sich der Volumenkörper 3 im wesentlichen nicht mechanisch verformt, wenn ein Überdruck anliegt. Der Volumenkörper 3 kann beispielsweise aus einem Polymer gefertigt sein, wie beispielsweise PVC, PE, PP, ABS, Polycarbonat und ähnlichem. Dagegen ist die Elastomermembran 13 elastisch rückstellfähig verformbar ausgebildet. Mit anderen Worten kann die Elastomermembran 13 durch einen in der Aktorkammer 11 angelegten Überdruck verformt werden. Da die Elastomermembran 13 rückstellfähig ausgebildet ist, kehrt die Elastomermembran 13 in ihre ursprüngliche Form bzw. Position zurück, wenn der Überdruck des Aktorkammerfluids 17 in der Aktorkammer 11 nicht mehr anliegt. Mit anderen Worten ist der Volumenkörper 3 starrer ausgebildet als die Elastomermembran 13. Insbesondere weist der Volumenkörper 3 einen größeren Schermodul und/oder Elastizitätsmodul als die Elastomermembran 13 auf.

In der Aktorfluidzufuhrverbindung 9 ist ein Heizelement 19 angeordnet, welches beispielsweise als Ohm'scher Widerstand bzw. Heizwiderstand 19 ausgebildet sein kann. Insbesondere kann das Heizelement 19 als SMD Bauteil ausgebildet sein, welches elektrisch mit einer Leiterplatte 5 als bevorzugtem planaren Substrat 5 elektrisch verbunden sein kann. Vorteilhafterweise kann die Leiterplatte 5 dann sowohl als mechanischer Träger des Volumenkörpers 3 als auch als Energieversorgung für das Heizelement 19 dienen.

Die Aktorfluidzufuhrverbindung 9 ist mit einem Verschlußmedium 21 gefüllt. Das Verschlußmedium 21 kann auch Teile der Aktorfluidzufuhr 7 füllen. In der in Figur 1 gezeigten bevorzugten Ausführungsform des Aktors 1 kontaktiert das Verschlußmedium 21 unmittelbar das Heizelement 19. Es versteht sich jedoch, daß das Verschlußmedium und das Heizelement 19 auch voneinander noch durch weitere Elemente getrennt sein können, wobei das Heizelement 19 das Verschlußmedium 21 thermisch kontaktiert. Mit anderen Worten ist das Verschlußmedium 21 mittels des Heizelements 19 erwärmbar.

In dem in Figur 1i gezeigten Zustand ist das Verschlußmedium 21 in einem festen Aggregatzustand, so daß die Aktorfluidzufuhrverbindung 9 durch das Verschlußmedium 21 druckdicht geschlossen ist. Mit anderen Worten hat ein Überdruck in dem Aktorfluid 15 innerhalb der Aktorfluidzufuhr 7 keine Wirkung auf das Aktorkammerfluid 17 in der Aktorkammer 11. Demnach kann das Anlegen eines Überdrucks in der Aktorfluidzufuhr 7 keine Verformung der Elastomermembran 13 bewirken.

Weiter bevorzugt umfaßt der Aktor 1 ein Kühlelement 23, welches beispielsweise als Peltier-Element ausgeführt sein kann. In der in Figur 1 gezeigten bevorzugten Ausführungsform des Aktors 1 kontaktiert das Kühlelement 23 das Verschlußmedium 21 lediglich mittelbar über das planare Substrat 5. Mit anderen Worten wird der thermische Kontakt über das planare Substrat 5 hergestellt. Somit kann das Verschlußmedium 21 mittels des Kühlelements 23 gekühlt werden. Insbesondere kann die Kühlung lokal erfolgen, wobei das Verschlußmedium 21 bevorzugt ausschließlich innerhalb der Aktorfluidzufuhrverbindung 9 bzw. im Bereich der Aktorfluidzufuhrverbindung 9 gekühlt wird bzw. kühlbar ist.

Der Aktor 1 wird bevorzugt bei einer Umgebungstemperatur von 20°C bis etwa 24°C betrieben. Da der Aktor 1 außer dem Heizelement 19 und dem Kühlelement 23 keine weiteren thermisch aktiven Bauelemente aufweist, entspricht die Temperatur innerhalb des Aktors, insbesondere innerhalb der Aktorfluidzufuhrverbindung 9, der Umgebungstemperatur, wenn das Heizelement 19 und das Kühlelement 23 deaktiviert sind. Bevorzugt wird das Verschlußmedium 21 derart ausgewählt, daß es bei einer Temperatur entsprechend der Umgebungstemperatur (also etwa 20°C bis 24°C) in einem festen Aggregatzustand vorliegt. Weiter wird das Heizelement 19 derart dimensioniert, daß das Heizelement 19 eine Heizleistung bereitstellt, die ausreicht, das Verschlußmedium 21 auf eine Temperatur oberhalb des Schmelzpunktes zu erwärmen. Ein beispielhaftes Verschlußmedium 21 ist Paraffin, welches je nach Moleküllänge der darin enthaltenen Alkane einen Schmelzpunkt von etwa 45°C bis etwa 80°C aufweist.

Zwecksmäßigerweise ist das Verschlußmedium 21 gegenüber dem Aktorfluid 15 chemisch beständig, insbesondere nicht lösbar. Beispielsweise kann das Verschlußmedium 21 aus einer oder mehreren nicht-polaren Substanz(en) bestehen, während das Aktorfluid 15 aus einer oder mehreren polaren Substanz(en) besteht. Bei der bevorzugten Verwendung von Paraffin als Verschlußmedium 21 kann beispielsweise Wasser als Aktorfluid 15 dienen.

Bevorzugt können Aktorfluid 15 und Verschlußmedium 21 identisch sein. Insbesondere für den Fall, daß das Verschlußmedium 21 gekühlt wird, um zu erstarren, können Aktorfluid 15 und Verschlußmedium 21 aus einer einzigen Flüssigkeit (beispielsweise Wasser) bestehen, die ohne Kühlung flüssig ist und die durch die Kühlung erstarrt.

In dem in Figur 1i gezeigten Ruhezustand des Aktors 1 sind der Heizwiderstand 19 sowie das Kühlelement 23 ausgeschaltet und das Verschlußmedium 21 liegt in einem festen Aggregatzustand vor, so daß die Aktorfluidzufuhrverbindung 9 fluiddicht bzw. druckdicht durch das Verschlußmedium 21 verschlossen ist und damit die Aktorkammer 11 fluidisch von der Aktorfluidzufuhr 7 getrennt ist. Da dem Aktor 1 keinerlei Energie zugeführt werden muß, um den Ruhezustand zu erhalten, kann dieser Ruhezustand als erster stabiler Zustand bezeichnet werden.

Wird das Heizelement 19 aktiviert bzw. eingeschaltet, so geht der Aktor 1 in den in Fig. 1ii gezeigten Zustand über, der solange aufrechterhalten wird, solange das Heizelement 19 eingeschaltet ist. Durch die durch das Heizelement 19 abgegebene thermische Energie wird das Verschlußmedium 21 auf eine Temperatur oberhalb der Schmelztemperatur, beispielsweise oberhalb 45°C oder etwa oberhalb 80°C, erwärmt, so daß das Verschlußmedium 21 in den flüssigen Aggregatzustand übergeht. Dadurch ist die Aktorkammer 11 nicht mehr mittels des Verschlußmediums 21 von der Aktorfluidzufuhr 7 druckdicht getrennt.

Durch Beaufschlagen des Aktorfluids 15 in der Aktorfluidzufuhr 7 mit einem Überdruck werden das Aktorfluid 15 und das Verschlußmedium 21 in Richtung der Aktorkammer 11 verlagert.

Durch Anlegen eines Überdrucks in der Aktorfluidzufuhr 7 (siehe Fig. 1iii) wird auch ein Überdruck in der Aktorkammer 11, die jetzt über die Aktorfluidzufuhrverbindung 9 fluidisch mit der Aktorfluidzufuhr 7 verbunden ist, angelegt. Durch den Überdruck in der Aktorkammer 11 wird die Elastomermembran 13 verformt bzw. zumindest teilweise entlang einer Aktuationsrichtung A verlagert. Der Druck in der Aktorfluidzufuhr 7 kann beispielsweise mittels einer nicht gezeigten Aktorfluidquelle angelegt werden. Alternativ kann das in der Aktorfluidzufuhr 7 enthaltene Aktorfluid 15 auch mittels eines anderen Fluids mit dem Überdruck beaufschlagt werden. Beispielsweise kann ein inkompressibles Aktorfluid 15 in die Aktorfluidzufuhr 7 gefüllt sein, wie beispielsweise eine Flüssigkeit, z.B. Wasser oder aliphatische Kohlenwasserstoffe. Im wesentlichen können alle Flüssigkeiten als Aktorfluid 15 eingesetzt werden, deren Schmelzpunkte knapp unterhalb des Arbeitsbereichs (beispielsweise etwa 0°C) des Aktors liegen. Inkompressible Flüssigkeiten sind vorteilhafterweise volumeninvarient, so daß der in der Aktorfluidzufuhr 7 wirkende Überdruck keine Änderung des Aktorfluidvolumens bewirkt, wodurch vorteilhafterweise Wirkungsverluste durch das Komprimieren des Aktorfluids vermieden werden. Beispielsweise kann das Akorfluid 15 in der Aktorfluidzufuhr 7 pneumatisch mit einem Überdruck belegt werden. Insbesondere kann eine Druckluftquelle (nicht gezeigt) mit der Aktorfluidzufuhr 7 fluidisch verbunden sein, so daß das in der Aktorfluidzufuhr 7 enthaltene Aktorfluid 15 mittels der Druckluft mit einem Überdruck beaufschlagt wird. Der für das Aktuieren der Elastomermembran 13 als bevorzugte Ausführungsform eines Aktorelements benötigte Überdruck kann etwa 1 bar bis etwa 4 bar betragen, weiter bevorzugt kann der Überdruck etwa 2 bar bis etwa 3 bar betragen.

Nachdem das Aktorelement bzw. die Elastomermembran 13 entlang der Aktuationsrichtung A verformt wurde, wird das Heizelement 19 abgeschaltet (siehe Fig. 1iv), so daß das Verschußmedium 21 nicht weiter erwärmt wird. Zusätzlich kann das Verschlußmedium 21 mittels des Kühlelements 23 gekühlt werden. Ist das Verschlußmedium 21 unterhalb des Schmelzpunktes abgekühlt, so liegt das Verschlußmedium 21 wieder in festem Aggregatzustand vor. Dabei wird die Aktorfluidzufuhrverbindung 9 wieder druckdicht verschlossen. Nach dem Erstarren des Verschlußmediums 21 bzw. dem Verschließen der Aktorfluidzufuhrverbindung 9 ist ein weiteres Kühlen mittels des Kühlelements 23 nicht mehr notwendig.

Alternativ kann das Kühlelement 23 kontinuierlich betrieben werden, wobei das Heizelement 19 lediglich zum Schmelzen des Verschlußmediums 21 eingeschaltet wird. Diese alternative Betriebsart erfolgt zweckmäßigerweise für den Fall, daß das Verschlußmedium 21 einen Schmelzpunkt aufweist, der unterhalb der Betriebstemperatur des Aktors 1 liegt, beispielsweise bei der Verwendung von Wasser als Verschlußmedium 21.

Es wird der in Figur 1iv gezeigte Aktuationszustand des Aktors 1 erreicht, bei welchem das Aktorelement bzw. die Elastomermembran 13 aufgrund des in der Aktorkammer 11 gehaltenen Überdrucks des Aktorkammerfluids 17 in der Aktuationsposition verlagert bzw. verformt bleibt. Da der Überdruck des Aktorkammerfluids 17 in der Aktorkammer 11 aufgrund des druckdichten Verschließens der Aktorfluidzufuhrverbindung 9 mittels des Verschlußmediums 21 von den Druckverhältnissen in der Aktorfluidzufuhr 7 unabhängig ist, kann der an die Aktorfluidzufuhr 7 angelegte Überdruck wieder abgelassen werden. Der Aktuationszustand kann deshalb auch als zweiter stabiler Zustand bezeichnet werden.

Ein Aktivieren des Heizelementes 19 führt zu einem Aufschmelzen des Verschlußmediums 21 in der Aktorfluidzufuhrverbindung 9, so daß der in der Aktorkammer 11 vorhandene Überdruck durch ein Verlagern des Verschlußmediums 21 zu einer von der Aktorkammer 11 weiter entfernten Position entweichen kann, wenn in der Aktorfluidzufuhr 7 kein Überdruck anliegt (siehe Fig. 1v). Insbesondere kann der Druck in der Aktorfluidzufuhr 7 dem Umgebungsdruck des Aktors 1 entsprechen, welcher auch auf die Außenseite 13a der Elastomermembran 13 entgegen der Aktuationsrichtung A wirkt. Die Rückstellkraft der rückstellfähig elastisch verformbaren Elastomermembran 13 sorgt dann für ein Rückstellen der Elastomermembran und für ein Verlagern des Verschlußmediums 21, wie in Figur 1vi gezeigt. Sobald die Elastomermembran 13 in ihrer Ursprungsposition zurückgekehrt ist, kann das Heizelement 19 deaktiviert werden, so daß das Verschlußmedium 21 wieder erstarrt und die Aktorfluidzufuhrverbindung 9 druckdicht verschließt, so daß der Aktor 1 in die Ruheposition, wie in Figur 1i gezeigt, zurückkehrt. Da der Aktor 1, wie in der Figur 1 gezeigt, genau zwei stabile Zustände aufweist, nämlich den Ruhezustand (siehe Fig. 1i) und den Aktuationszustand (siehe Fig. 1iv), kann der Aktor 1 auch als bistabiler Aktor 1 bezeichnet werden.

Mit anderen Worten kann der in Figur 1 gezeigte bistabile Aktor 1 ein Verfahren zum bistabilen Aktuieren mit folgenden Schritte durchführen:
- Verflüssigen des Verschlußmediums 21, welches in der Aktorfluidzufuhrverbindung 9 zwischen einer Aktorkammer 11 und einer Aktorfluidzufuhr 7 angeordnet ist und die Aktorkammer 11 von der Aktorfluidzufuhr 7 fluidisch trennt;
- Anlegen eines Fluidüberdruckes in der Aktorfluidzufuhr 7, wobei das aufgeschmolzene Verschlußmedium 21 zumindest teilweise in Richtung der Aktorkammer 11 verlagert wird und wobei ein Arbeitsüberdruck in der Aktorkammer 11 erzeugt wird, wodurch ein mit der Aktorkammer 11 fluidisch verbundenes Aktorelement 13 von einer Ruheposition in eine Aktuationsposition überführt wird;
- Erstarren des Verschlußmediums 21, wobei die Aktorfluidzufuhrverbindung 9 druckdicht verschlossen wird, so daß der Arbeitsdruck in der Aktorkammer 11 erhalten und das Aktorelement 13 in der Aktuationsposition verbleibt.

Der Aktor befindet sich nach diesen Schritten in einem stabilen Aktuationszustand, der keine weitere Energiezufuhr benötigt. Bevorzugt kann das Verfahren einen oder mehrere folgender weiterer Schritte umfassen:
- Ablassen des Überdrucks oder Anlegen eines Unterdrucks in der Aktorfluidzufuhr 7;
- Verflüssigen des Verschlußmediums 21 in der Aktorfluidzufuhrverbindung 9, wobei der Arbeitsüberdruck in der Aktorkammer 11 sinkt und das Aktorelement 13 von der Aktuationsposition in die Ruheposition zurückkehrt.
- Erstarren des Verschlußmediums 21, wobei der Aktor 1 ist seinen ursprünglichen Ruhezustand übergeht.

Der in der Figur 1 gezeigte Aktor 1 weist bevorzugt eine Aktorfluidzufuhrverbindung 9 auf, welche einen Durchmesser bzw. eine Spaltbreite von etwa 10 µm bis etwa 1 mm aufweist, wodurch nur ein geringes Volumen an Verschlußmedium 21 notwendig ist, um die Aktorfluidzufuhrverbindung 9 zu verschließen. Dadurch hat der Aktor 1 vorteilhafterweise eine verbesserte Aktordynamik, da die Zeit zum Aufschmelzen des geringen Volumens an Verschlußmedium 21 entsprechend klein ist. Die Schaltzeiten des Aktors 1 vom Ruhezustand in den Aktuationszustand kann daher im Bereich von etwa 0,1 sec bis etwa 1 sec betragen.

Da es lediglich notwendig ist, das Verschlußmedium 21 im Bereich der Aktorfluidzufuhrverbindung 9 derart zu erwärmen, daß das Verschlußmedium 21 in den flüssigen Aggregatzustand übergeht, bleibt die Erwärmungszone für das Heizelement 19 auf den Bereich der Aktorfluidzufuhrverbindung 9 beschränkt. Insbesondere kann das Heizelement 19 eine Wandung der Aktorfluidzufuhrverbindung 9 ausbilden. Dadurch kann die Kontaktfläche des Heizelements 19 mit dem Verschlußmedium 21 im Verhältnis zum Volumen des Verschlußmediums 21 derart günstig ausfallen, daß ein Aufschmelzen des Verschlußmediums 21 im gesamten Volumen der Aktorfluidzufuhrverbindungen 9 vorzugsweise in einer Zeit kleiner als 1 sec erfolgen kann. Bevorzugt kann das Heizelement 19 als SMD Bauteil (surface mounted device) ausgebildet sein, wodurch das Heizelement 19 insbesondere in einfacher Weise an eine Leiterplatte 5 als bevorzugtes planares Substrat 5 befestigt und elektrisch kontaktiert werden kann.

Weiter vorteilhafterweise ermöglicht der Aktor 1 eine räumliche Entkopplung und damit eine effektive thermische Trennung zwischen der (thermisch modulierten) Aktorfluidzufuhrverbindung 9 und der Aktorkammer 11 bzw. dem Aktorelement 13, welches bevorzugt als Elastomermembran 13 ausgebildet ist, das heißt, dem Ort, an welchem das Aktorelement 13 entlang der Aktuierungsrichtung A verlagert wird (an dem Ort, an welchem ein Aktorhub auftritt). Da das Aktorfluid 15 bevorzugt eine inkompressible Flüssigkeit ist, kann der Aktorhub nahezu unbegrenzt hydraulisch übertragen werden. Mit anderen Worten kann die fluidische Verbindung zwischen der Aktorkammer 11 und der Aktorfluidzufuhrverbindung 9 länger als einige Millimeter, insbesondere größere als 1 cm, bevorzugt größer als 5 cm sein, wodurch die Ausbildung des Aktors variabel erfolgen kann.

In einer bevorzugten Ausführungsform des in der Figur 1 gezeigten Aktors 1 umfaßt der Aktor neben dem Heizelement eine Wärmesenke bzw. ein Kühlelement 23, welche beispielsweise in Form einer heat pipe oder eines Peltier-Elements ausgeführt sein kann. Das Kühlelement 23 kann bevorzugt permanent in Betrieb sein. Dies ist insbesondere deshalb vorteilhaft, da es technisch einfacher ist, lokal Wärme zu erzeugen, als lokal Wärme abzuführen. Das Heizelement 19 kann zur Überkompensation des Kühlelements 23 zeitlich gesteuert ein- und ausgeschaltet werden. Die Erzeugung von Wärme erfolgt vorteilhafterweise sehr schnell, das heißt, bevorzugt schneller als etwa 100 Millisekunden, bevorzugt schneller als etwa 50 Millisekunden und insbesondere schneller als etwa 10 Millisekunden, beispielsweise im Fall eines Ohm'schen Widerstandes als bevorzugte Ausführungsform eines Heizelementes 19. Da das Abführen der Wärme bevorzugt kontinuierlich erfolgt, weist der Aktor 1 nach dem Abschalten des Heizelements 19 eine ähnlich gute Aktordynamik auf, wie beim Aufheizen. Weiter bevorzugt kann in einer Anordnung von mehreren Aktoren 1 ein gemeinsames Kühlelement 23 vorgesehen sein, welches als gemeinsame Wärmesenke für eine Mehrzahl von Heizelementen 19 dient.

Weiter vorteilhafterweise ist der in Figur 1 gezeigte Aktor 1 konstruktiv einfach aufgebaut. Er umfaßt vorzugsweise einen festen Volumenkörper 3, ein planares Substrat 5, mit daran angeordneten bzw. befestigten und elektrisch kontaktierten Heizelementen 19 sowie einer auf dem Volumenkörper 3 aufgebrachten Elastomermembran 13. Es sind somit vorteilhafterweise lediglich zwei Verbindungsschritte notwendig, um einen Aktor gemäß Figur 1 herzustellen. Insbesondere sind die Verbindungen zwischen dem Volumenkörper 3 und der Elastomermembran 13 bzw. dem Volumenkörper 3 und dem planaren Substrat 5 flächig bzw. flächenwirksam ausgebildet. Mit anderen Worten kann die Elastomermembran 13 durch ein Kleben bzw. Laminieren mit dem Volumenkörper 3 verbunden werden. Weiter vorzugsweise kann der Volumenkörper 3 durch ein Kleben oder Laminieren mit dem planaren Substrat 5 verbunden werden.

Weiter vorteilhafterweise ist der in Figur 1 gezeigte Aktor 1 im klassischen Sinne bistabil: Der Ruhezustand des Aktors, in welchem das Aktorelement sich in einer Ruheposition befindet, ebenso wie der Aktuationszustand, bei welchem das Aktorelement entlang der Aktuierungsrichtung A ausgelenkt ist und sich in einer Aktuierungsposition befindet, werden über den Phasenübergang des Verschlußmediums stabilisiert. Mit anderen Worten bewirkt der feste Aggregatzustand des Verschlußmediums 21, daß sich der Zustand des Aktors 1 nicht mehr ändert, ohne daß dem Aktor 1 Energie zugeführt wird, welche beispielsweise mittels des Heizelements 19 das Verschlußmedium 21 in den flüssigen Aggregatszustand überführt. Im Gegensatz dazu muß das Aktorfluid 15 bei den Temperaturen, die beim betriebsgemäßen Gebrauch des Aktors 1 in der Aktorfluidzufuhr 7 auftreten, immer flüssig sein. Daher eignen sich Paraffine, welche typischerweise einen Schmelzpunkt größer als 40°C aufweisen, nicht als Aktorfluid 15. Bevorzugt werden inkompressible Flüssigkeiten als Aktorfluid 15 eingesetzt, beispielsweise Wasser oder aliphatische Kohlenwasserstoffe, deren Schmelzpunkte unterhalb der Temperatur des Aktors 1 bei betriebsgemäßem Gebrauch (beispielsweise um 0°C) liegen.

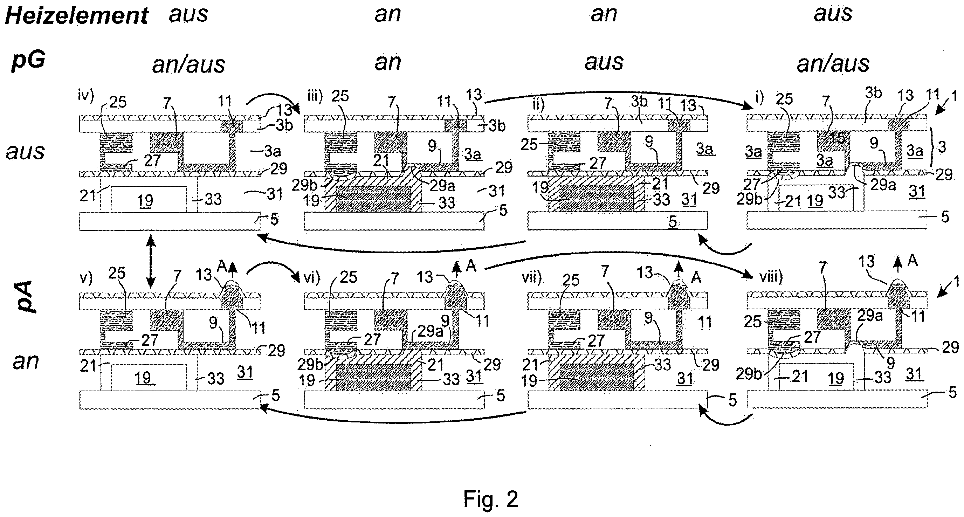

Die **Figur 2** zeigt Schnittansichten durch eine weitere bevorzugte Ausführungsform eines bistabilen Aktors 1 in acht verschiedenen Zuständen i bis viii. Der Aufbau des Aktors 1 in Figur 2 entspricht in vielen Elementen dem Aufbau des in Figur 1 gezeigten Aktors. Die identischen Bauteile sind deshalb mit identischen Bezugszeichen versehen.

Der Aktor 1 umfaßt einen Volumenkörper 3, welcher aus zwei Schichten 3a und 3b besteht, welche miteinander verbunden bzw. verklebt sind, beispielsweise durch Laminieren. In dem Volumenkörper 3 ist eine Aktorfluidzufuhr 7 und eine Aktorfluidzufuhrverbindung 9 innerhalb einer ersten Schicht 3a des Volumenkörpers 3 ausgebildet. Die zweite Schicht 3b des Volumenkörpers 3 bildet zumindest teilweise eine Aktorkammer 11 aus, welche mit der Aktorfluidzufuhrverbindung 9 fluidisch verbunden ist. An der zweiten Schicht 3b des Volumenkörpers 3 ist eine Elastomermembran 13 befestigt, wobei die Elastomermembran 13 zumindest eine Wandung der Aktorkammer 11 ausbildet. Weiter sind in der ersten Schicht 3a des Volumenkörpers 3 eine Reservoirfluidzufuhr 25 sowie eine Reservoirfluidzufuhrverbindung 27 ausgebildet, welche nicht mit der Aktorfluidzufuhr 7 fluidisch verbunden sind bzw. von dieser getrennt sind.

An der ersten Schicht 3a des Volumenkörpers 3 ist eine zweite Elastomermembran 29 angeordnet bzw. befestigt, welche zumindest bereichsweise eine Wandung der Aktorfluidzufuhrverbindung 9 und der Reservoirfluidzufuhrverbindung 27 ausbildet. Insbesondere ist die zweite Elastomermembran 29 in dem Bereich, der die Wandung der Aktorfluidzufuhrverbindung 9 ausbildet, elastisch rückstellfähig ausgebildet, so daß die zweite Elastomermembran 29 in diesem Bereich als Verschlußelement 29a fungiert. Weiter ist die zweite Elastomermembran 29 in dem Bereich, welcher die Wandung der Reservoirfluidzufuhrverbindung 27 ausbildet, verformbar ausgebildet, so daß dieser Bereich der zweiten Elastomermembran 29 als Druckübertragungselement 29b dienen kann. Insbesondere ist das Druckübertragungselement 29b dadurch verformbar, daß mittels der Reservoirfluidzufuhr 25 ein Überdruck in der Reservoirfluidzufuhrverbindung 27 an das Druckübertragungselement 29b angelegt wird, welches sich dadurch verformt. An der Seite der zweiten Elastomermembran 29, welche dem Volumenkörper 3 gegenüberliegt bzw. entgegengesetzt ist, ist ein zweiter Volumenkörper 31 an der zweiten Elastomermembran 29 angeordnet bzw. befestigt. In dem zweiten Volumenkörper 31 ist ein Verschlußmediumreservoir 33 ausgebildet, welches ein Verschlußmedium 21 enthält. Das Verschlußmediumreservoir 33 ist fluidisch mit dem Verschlußelement 29a und dem Druckübertragungselement 29b verbunden. Dies kann bevorzugt dadurch realisiert sein, daß das Verschlußelement 29a und/oder das Druckübertragungselement 29b zumindest bereichsweise die Wandung des Verschlußmediumreservoirs 33 ausbildet bzw. ausbilden.

Weiter kann bevorzugt in dem Verschlußmediumreservoir 33 ein Heizelement 19 angeordnet sein, welches ausgelegt ist, das Verschlußmedium 21 innerhalb des Verschlußmediumreservoirs 33 zu erwärmen, um dieses von einem festen Zustand in einen flüssigen Zustand zu überführen. Ein bevorzugtes Verschlußmedium 21 ist Paraffin, wie dies schon im Bezug auf Figur 1 beschrieben ist. An dem zweiten Volumenkörper 31 ist in der in Figur 2 gezeigten Ausführungsform ein planares Substrat 5 angeordnet bzw. befestigt, wobei das planare Substrat 5 in einer bevorzugten Ausführungsform als Leiterplatte 5 ausgebildet ist, welche das Heizelement 19 trägt und dieses elektrisch kontaktiert.

Die Funktionsweise der in Figur 2 gezeigten Ausführungsform des Aktors 1 entspricht im wesentlichen der Funktionsweise des in Figur 1 gezeigten Aktors, wobei die Verschlußvorrichtung des in Figur 2 gezeigten Aktors 1 einen mit dem Verschlußmedium 21 gefüllten bistabilen Aktor umfaßt.

In dem in Figur 2i gezeigten Ruhezustand des Aktors 1 befindet sich das Aktorelement 13, welches als elastisch und rückstellfähig verformbare Elastomermembran 13 ausgebildet ist, in einer Ruheposition. Die Aktorfluidzufuhrverbindung 9 ist durch einen verformten Bereich der zweiten Elastomermembran 29 fluiddicht und druckdicht verschlossen, so daß die Aktorkammer 11 von der Aktorfluidzufuhr 7 fluidisch getrennt ist. Der verformte Bereich der zweiten Elastomermembran wirkt daher als Verschlußelement 29a. Das Verschlußelement 29a wird bevorzugt durch ein erstarrtes Verschlußmedium 21, welches in dem Verschlußmediumreservoir 33 angeordnet ist, in seiner Position gehalten. Ob in der Reservoirfluidzufuhr 25 ein Überdruck anliegt, ist daher für die Position des Verschlußelements 29a nicht relevant. Der Aktor 1 befindet sich somit in einem stabilen Zustand.

Durch das Aktivieren des Heizelements 19 wird das Verschlußmedium 21 in dem Verschlußmediumreservoir 33 aufgeschmolzen bzw. verflüssigt, so daß sich das rückstellfähig ausgebildete Verschlußelement 29a in seine ursprüngliche Form bzw. Lage zurückkehren kann, wenn kein Überdruck in der Reservoirfluidzufuhr 25 herrscht. Dadurch geht der Aktor in den in der Figur 2ii gezeigten Zustand über, bei welchem die Aktorkammer 11 fluidisch mit der Aktorfluidzufuhr 7 über die Aktorfluidzufuhrverbindung 9 fluidisch verbunden ist.

Das Heizelement 19 kann nun wieder deaktiviert werden, wie dies in Figur 2iv dadurch dargestellt ist, daß das Heizelement 19 nicht mehr gefüllt dargestellt ist.

Durch das Anlegen eines Überdrucks in der Aktorfluidzufuhr 7 kann ein Arbeitsüberdruck in der Aktorkammer 11 angelegt werden, wodurch sich das Aktorelement 13 verformt bzw. entlang einer Aktuationsrichtung A linear verlagert. Das aktuelle Element 13 geht somit in die Aktuationsposition über, wie dies in Figur 2v gezeigt ist.

Durch das Aktivieren des Heizelements 19 kann das Verschlußmedium 21 in dem Verschlußmediumreservoir 33 aufgeschmolzen werden bzw. flüssig gehalten werden, so daß durch Anlegen eines Überdrucks in der Reservoirfluidzufuhr 25, welche mit der Reservoirfluidzufuhrverbindung 27 den Überdruck auf das Verschlußmediumreservoir 33 ausüben kann, das flüssige Verschlußmedium 21 derart mit einem Überdruck beaufschlagt werden, so daß das elastische verformbare Verschlußelement 29a derart verformt wird, um die Aktorfluidzufuhrverbindung 9 zu verschließen. Dieser Zustand ist in der Figur 2vi gezeigt.

Nach dem Deaktivieren des Heizelements 19 erstarrt das Verschlußmedium 21 in dem Verschlußmediumreservoir 33, so daß das Verschlußelement 29a stabil in der Geschlossenposition, wie in Figur 2viii gezeigt ist, gehalten wird. Dieser Zustand, welcher als Aktuationszustand des Aktors 1 bezeichnet werden kann, ist ohne weitere Energiezufuhr stabil.

Um den Aktor 1 von dem Aktuationszustand zurück in den Ruhezustand zu überführen, kann das Heizelement 19 aktiviert werden, wobei gleichzeitig kein Überdruck in der Reservoirfluidzufuhr 25 angelegt ist, wie dies in Figur 2vii gezeigt ist. Dadurch geht das Verschlußelement 29a zurück in eine Offenposition, in der die Aktorfluidzufuhrverbindung 9 zwischen der Aktorkammer 11 und der Aktorfluidzufuhr 7 geöffnet ist.

Das Heizelement 19 kann in dieser Phase deaktiviert werden, wie dies in Figur 2v gezeigt ist.

Ist kein Überdruck in der Aktorfluidzufuhr 7 angelegt bzw. herrscht in der Aktorfluidzufuhr 7 ein Unterdruck gegenüber dem Umgebungsdruck des Aktors 1, so wird das Aktorelement 13 entgegen der Aktuationsrichtung A verlagert bzw. kehrt das aktuelle Element 13 durch seine Rückstellfähigkeit in seine ursprüngliche Lage zurück, wie dies in Figur 2iv gezeigt ist.

Um das Aktorelement 13 stabil in der Ruheposition zu halten, kann wiederum das Heizelement 19 aktiviert sein, um das Verschlußmedium 21 in dem Verschlußmediumreservoir 33 flüssig zu halten bzw. aufzuschmelzen, wobei dann ein Überdruck in der Reservoirfluidzufuhr 25 angelegt wird, um, wie oben beschrieben, das Verschlußelement 29a in eine Geschlossenposition zu überführen, in welcher die Aktorfluidzufuhrverbindung 9 fluiddicht und druckdicht geschlossen ist. Dieser Zustand ist in Figur 2iii gezeigt.

Nach dem Deaktivieren des Heizelements 19 und dem Erstarren des Verschlußmediums 21 wird das Verschlußelement 29a stabil in der Geschlossenposition gehalten, so daß der Aktor 1 in den in Figur 2i gezeigten Ruhezustand zurückkehrt.

Die vorstehend mit Bezug auf die Figuren 1 und 2 beschriebenen Aktoren sind bistabil und binär ausgeführt. Mit anderen Worten kann das Aktorelement 13 in zwei verschiedenen Zuständen vorliegen, nämlich in der Ruheposition und in der Aktuationsposition. Dabei kann der Aktor 1 jeweils in einen stabilen Zustand gebracht werden, bei welchem das Aktorelement in der Ruheposition bzw. in der Aktuationsposition ohne weitere Energiezufuhr gehalten wird. Weiterhin sind die beschriebenen Aktoren vorteilhafterweise so hochintegrierbar. Insbesondere ist es konstruktiv einfach, mehrere solche Aktoren in einen festen Volumenkörper, beispielsweise einer Polymerkomponente einzubringen. Dies kann vorteilhafterweise durch einfache und kostengünstige Fertigungsverfahren, beispielsweise mittels Spritzgußtechnik erfolgen.

In einem nächsten Schritt zum Herstellen eines Aktors bzw. einer Aktoranordnung kann eine Leiterplatte an einer Seite der Polymerkomponente bzw. des Volumenkörpers 3 angeordnet bzw. befestigt werden. Insbesondere kann jedem Aktor 1 ein individuell adressierbarer Heizwiderstand 19 zugeordnet sein. Die Aktorkammern 11, die Aktorfluidzufuhrverbindung 9 sowie zumindest teilweise die Aktorfluidzufuhr 7 kann dann mit einem Fluid, beispielsweise Wasser, befüllt werden. Zur besseren Handhabung kann diese Anordnung in diesem Zustand eingefroren werden, beispielsweise in einem Tiefkühlschrank, bevor flächig eine Ebene und strukturierte Elastomermembran 13 als bevorzugtes Aktorelement 13 aufgebracht bzw. befestigt wird, wobei die Elastomermembran 13 die Aktorkammern 11 verschließt.

Mit Hilfe dieses Herstellungsverfahrens ist es möglich, zugleich eine Mehrzahl von Aktoren 1 in einer Aktoranordnung herzustellen. Insbesondere können mehrere zig oder hundert solcher Aktoren gleichzeitig in einer Aktoranordnung hergestellt werden. Vorteilhafterweise ist keine Justierung aktiv bewegter mechanischer Komponenten notwendig und bis auf eine grobe Ausrichtung, die sicherstellt, daß die Heizelemente 19 relativ zu den Aktorfluidzufuhrverbindungen 9 bzw. den Verschlußmediumreservoiren 33 angeordnet sind, ist in der Herstellung der Aktoranordnung keine genaue Positionierung weiterer Komponenten notwendig.

Weiter vorteilhafterweise sind die gezeigten Ausführungsformen gut skalierbar. Hierfür können eine Vielzahl der Aktoren 1 konstruktiv hochintegriert werden, beispielsweise etwa 500 Aktoren in unmittelbarer Nähe. Diese können bevorzugt über eine Leiterplatte mit entsprechend etwa hundert einzeln adressierbaren Heizelementen 19 gesteuert werden, wobei jedem einzelnen Aktor ein einzeln adressierbares Heizelement 19 zugeordnet ist. An der Leiterplatte kann bevorzugt eine gemeinsame Wärmesenke angebracht bzw. angeordnet sein, beispielsweise in Form eines elektrisch schaltbaren Peltier-Elements. Werden nun konstruktiv die einzelnen Aktorfluidzufuhren über eine gemeinsame Fluidquelle bzw. ein gemeinsames Fluidreservoir mit einem Aktorfluid betrieben, so wird einfaches skalierbares Funktionsprinzip ermöglicht. Hierbei wird das gemeinsame Fluidreservoir periodisch mit einem Überdruck (beispielsweise 3 bar) belastet, für wenige Sekunden gehalten und wieder auf Umgebungsdruck entspannt. Nun können synchron zu dieser Druckbeaufschlagung und Entlastung, die Einzelheizelemente 19 an bzw. abgeschaltet werden. Durch die Verwendung dieser parallelen Druckbeaufschlagung in Verbindung mit der Verwendung eines Phasenübergangs bzw. Aggregatzustandsübergangs in einer Aktorfluidzufuhrverbindung, die als dünner Spalt bzw. dünner Kanal ausgebildet sein kann, ergibt sich, daß eine einfache robuste binäre wie stabile hochintegrierbare und nahezu unbegrenzt skalierbare Aktoranordnung hergestellt werden kann.

Dabei besitzt der Aktor eine hohe Dynamik, da aufgrund des geringen Volumens in der Aktorfluidzufuhrverbindung 9 das Volumen an Verschlußmedium 21, welches aufzuschmelzen bzw. zu erstarren ist, sehr gering ist, beispielsweise kleiner als 1 mm³ und insbesondere kleiner als 0,1 mm³. Dadurch kann vorteilhafterweise eine nahezu punktförmige Heizquelle in Form eines Heizelements 19 verwendet werden, um das Aufschmelzen des Verschlußmediums 21 durchzuführen. Weiter bevorzugt kann ein solches Heizelement kostengünstig und einfach als SMD Widerstand ausgebildet sein, welcher in einfacher Art und Weise an die Leiterplatte kontaktiert werden kann.

Dennoch kann ein beliebiger Aktorhub des Aktorelements 13 erfolgen, da die Stärke des Aktorhubs von der Menge des Verschlußmediums unabhängig ist. Vielmehr kann ein Aktorfluid mit beliebigem Druck und beliebigem Volumen bereitgestellt sein, um einen beliebigen Aktorhub des Aktorelements 13 bzw. eine beliebige Aktuationskraft des Aktorelements 13 bereitzustellen. Weiter ist es vorteilhafterweise möglich, einen parallelen Betrieb von mehreren Aktorelementen 13 mit einer einzigen externen Druckquelle, welche ein Aktorfluid 15 bereitstellt, durchzuführen.

Weiter vorteilhafterweise ist eine Aktoranordnung in einfacher Weise aufzubauen und herzustellen, da die einzelnen Bauelemente separat hergestellt werden können und flächig miteinander durch Verkleben bzw. Laminieren verbunden werden können. Im besonderen ist dadurch das Einfüllen des Verschlußmediums in einfacher Weise möglich. Dieses kann als Feststoff oder in flüssiger Form in die zugehörige Ausnehmung des entsprechenden Bauelements der Aktoranordnung beim Herstellen angeordnet werden.

Weiter vorteilhafterweise sind die Heizelemente 19 von dem Aktorelement 13 beliebig beabstandbar, wobei insbesondere das Verschlußmedium 21 das aktuelle Element nicht kontaktiert. Dadurch ist es konstruktiv möglich, eine einfache und effizientere Wärmeabfuhr für das Verschlußmedium 21 vorzusehen, wodurch dieses in kürzerer Zeit erstarren kann.

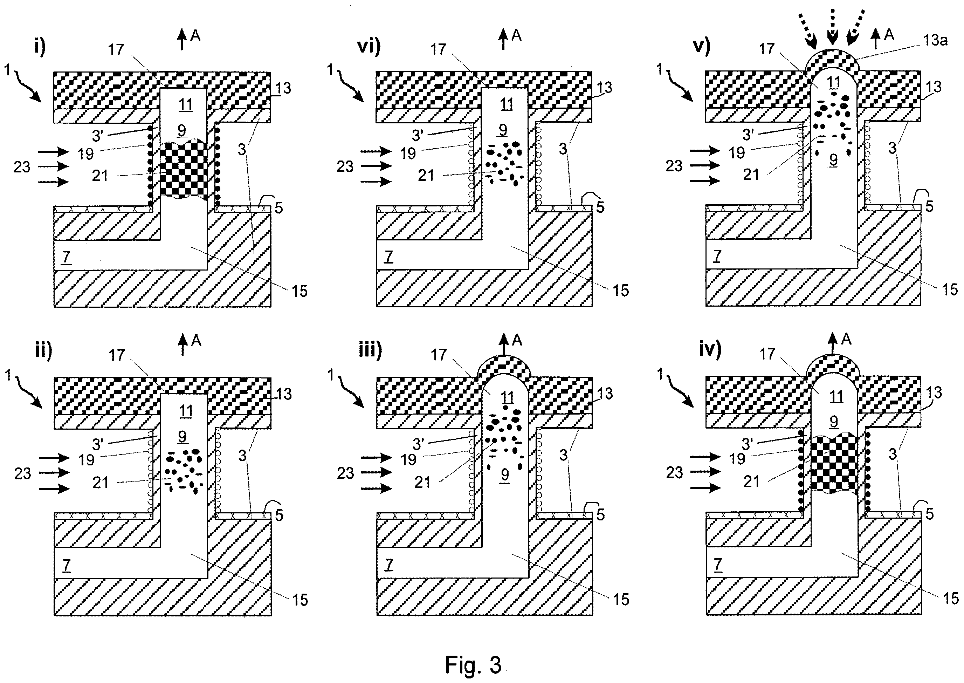

Die **Figuren 3i bis 3vi** zeigen eine weitere bevorzugte Ausführungsform des Aktors in sechs verschiedenen Zuständen i bis vi. Die Figur 3i zeigt den Aktor 1 in einem Ruhezustand. Der Aktor 1 ist als mikrofluidischer Aktor ausgebildet, welcher einen im wesentlichen starren Volumenkörper 3 umfaßt, an den bevorzugt ein planares Substrat 5 angeordnet ist. Der Volumenkörper 3 umfaßt eine Ausstülpung 3', welche sich durch eine Öffnung 5' des planaren Substrats hindurch erstreckt. In dem Volumenkörper 3 des Aktors 1 sind eine Aktorfluidzufuhr 7, eine Aktorfluidzufuhrverbindung 9 und eine Aktorkammer 11 ausgebildet. Die Aktorfluidzufuhrverbindung 9 und die Aktorkammer 11 können dabei gemeinsam innerhalb eines Hohlraumes angeordnet sein, welcher in der Ausstülpung 3' angeordnet ist. Insbesondere können die Aktorfluidzufuhrverbindung 9 und die Aktorkammer 11 einen gemeinsamen zylindrischen Hohlraum ausbilden. Beispielsweise kann die Ausstülpung 3' des Volumenkörpers 3 zumindest bereichsweise im wesentlichen rohrförmig sein, wobei die Aktorfluidzufuhrverbindung 9 und/oder die Aktorkammer 11 in dem rohrförmige Bereich angeordnet ist/sind.

Die Wandung der Aktorkammer 11 ist bereichsweise durch eine Elastomermembran 13 ausgebildet, welche an dem Volumenkörper 3 bzw. dessen Ausstülpung 3' befestigt ist, beispielsweise durch Kleben oder Laminieren. Insbesondere kann die Elastomermembran eine Ausnehmung aufweisen, welche zumindest teilweise die Aktorkammer 11 ausbildet.

Die Aktorfluidzufuhr 7 und/oder die Aktorfluidzufuhrverbindung 9 und/oder die Aktorkammer 11 ist/sind als mikrofluidische Kanäle ausgebildet. Mit anderen Worten weisen die Aktorfluidzufuhr 7 und/oder die Aktorfluidzufuhrverbindung 9 und/oder die Aktorkammer 11 einen Durchmesser von weniger als 1 mm, bevorzugt weniger als 100 µm und insbesondere einen Durchmesser von etwa 10 µm bis etwa 50 µm auf.

Das Volumen der Aktorkammer 11 liegt dementsprechend in einem Bereich von etwa 0,01 mm³ bis etwa 2 mm³. Bei einem betriebsgemäßen Gebrauch des Aktors 1 ist die Aktorfluidzufuhr 7 mit einem Aktorfluid 15 gefüllt und mit einer Aktorfluidquelle (nicht gezeigt) fluidisch verbunden, um einen Überdruck in der Aktorfluidzufuhr 7 bereitstellen zu können. Die Aktorkammer 11 ist bei betriebsgemäßem Gebrauch mit einem Aktorkammerfluid 17 gefüllt, welches von dem Aktorfluid 15 in der Aktorfluidzufuhr 7 verschieden oder damit identisch sein kann. Da beim betriebsgemäßen Gebrauch des Aktors 1 in der Aktorfluidzufuhr 7, in der Aktorfluidzufuhrverbindung 9 sowie in der Aktorkammer 11 ein Überdruck anliegen kann, ist der Volumenkörper 3 bzw. die Ausstülpung 3' des Aktors 1 derart mechanisch starr ausgebildet, daß sich der Volumenkörper 3 bzw. die Ausstülpung 3' im wesentlichen nicht mechanisch verformen, wenn ein Überdruck anliegt.

Der Volumenkörper 3 kann beispielsweise aus einem Polymer gefertigt sein, wie beispielsweise PVC, PE, PP, ABS, Polycarbonat und ähnlichem. Dagegen ist die Elastomermembran 13 elastisch rückstellfähig verformbar ausgebildet. Mit anderen Worten kann die Elastomermembran 13 durch einen in der Aktorkammer 11 angelegten Überdruck verformt werden. Da die Elastomermembran 13 rückstellfähig ausgebildet ist, kehrt die Elastomermembran 13 in ihre ursprüngliche Form bzw. Position zurück, wenn der Überdruck des Aktorkammerfluids 17 in der Aktorkammer 11 nicht mehr anliegt. Mit anderen Worten ist der Volumenkörper 3 starrer ausgebildet als die Elastomermembran 13. Insbesondere weist der Volumenkörper 3 einen größeren Schermodul und/oder Elastizitätsmodul als die Elastomermembran 13 auf.

Im Bereich der Aktorfluidzufuhrverbindung 9 ist ein Heizelement 19 angeordnet, welches beispielsweise als Ohm'scher Widerstand bzw. Heizwiderstand 19 ausgebildet sein kann. Insbesondere kann das Heizelement 19 als Heizdraht ausgebildet sein, welcher außen um die Wandung der Aktorfluidzufuhrverbindung 9 bzw. um die durch die Ausstülpung 3' ausgebildete Wandung, insbesondere spiralförmig, gewunden ist. Das Heizelement 19 kann elektrisch mit einer Leiterplatte 5 als bevorzugtem planaren Substrat 5 elektrisch verbunden sein. Vorteilhafterweise kann die Leiterplatte 5 dann sowohl als mechanischer Träger des Volumenkörpers 3 als auch als Energieversorgung für das Heizelement 19 dienen.

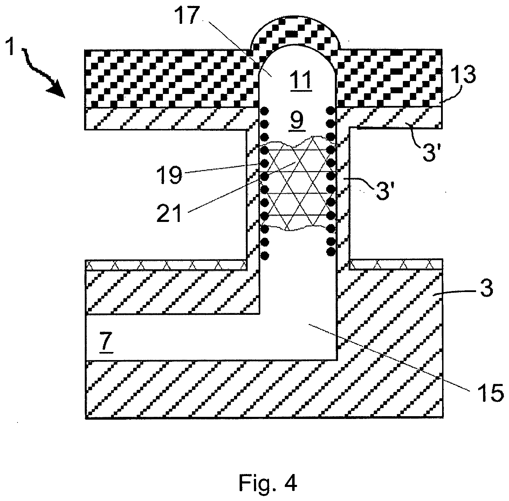

Die Aktorfluidzufuhrverbindung 9 ist mit einem Verschlußmedium 21 gefüllt. Das Verschlußmedium 21 kann auch Teile der Aktorfluidzufuhr 7 füllen. In der in Figur 3 gezeigten bevorzugten Ausführungsform des Aktors 1 kontaktiert das Verschlußmedium 21 mittelbar über die Wandung der Aktorfluidzufuhrverbindung 9 bzw. der Ausstülpung 3' das Heizelement 19. Es versteht sich jedoch, daß das Verschlußmedium 21 und das Heizelement 19 auch voneinander noch durch weitere Elemente getrennt sein können, wobei das Heizelement 19 das Verschlußmedium 21 thermisch kontaktiert, oder daß das Heizelement 19 innerhalb der Aktorfluidzufuhrverbindung 9 angeordnet ist, so daß sich das Heizelement 19 und das Verschlußmedium unmittelbar kontaktieren (siehe Figur 4). Mit anderen Worten ist das Verschlußmedium 21 mittels des Heizelements 19 erwärmbar.

In dem in Figur 3i gezeigten Zustand ist das Verschlußmedium 21 in einem festen Aggregatzustand, so daß die Aktorfluidzufuhrverbindung 9 durch das Verschlußmedium 21 druckdicht geschlossen ist. Mit anderen Worten hat ein Überdruck in dem Aktorfluid 15 innerhalb der Aktorfluidzufuhr 7 keine Wirkung auf das Aktorkammerfluid 17 in der Aktorkammer 11. Demnach kann das Anlegen eines Überdrucks in der Aktorfluidzufuhr 7 keine Verformung der Elastomermembran 13 bewirken.

Weiter bevorzugt umfaßt der Aktor 1 ein Kühlelement 23, welches beispielsweise als Peltier-Element ausgeführt sein kann. Das Kühlelement 23 kann dabei unmittelbar oder mittelbar mit dem Heizelement 19 und/oder dem planaren Substrat 5 kontaktieren. Beispielsweise kann das Kühlelement 23 als Fluidkanal ausgebildet sein, durch welchen ein im Vergleich zum Aktorfluid 7 oder zum Verschlußmedium 21 relativ kaltes Fluid zum Heizelement 19 bzw. zur Aktorfluidzufuhrverbindung 9 geführt wird, um das Verschlußmedium 21 zu kühlen.

Der Aktor 1 wird bevorzugt bei einer Umgebungstemperatur von 20°C bis etwa 24°C betrieben. Da der Aktor 1 außer dem Heizelement 19 und dem Kühlelement 23 keine weiteren thermisch aktiven Bauelemente aufweist, entspricht die Temperatur innerhalb des Aktors, insbesondere innerhalb der Aktorfluidzufuhrverbindung 9, der Umgebungstemperatur, wenn das Heizelement 19 und das Kühlelement 23 deaktiviert sind. Bevorzugt wird das Verschlußmedium 21 derart ausgewählt, daß es bei einer Temperatur entsprechend der Umgebungstemperatur (also etwa 20°C bis 24°C) in einem festen Aggregatzustand vorliegt. Weiter wird das Heizelement 19 derart dimensioniert, daß das Heizelement 19 eine Heizleistung bereitstellt, die ausreicht, das Verschlußmedium 21 auf eine Temperatur oberhalb des Schmelzpunktes zu erwärmen. Ein beispielhaftes Verschlußmedium 21 ist Paraffin, welches je nach Moleküllänge der darin enthaltenen Alkane einen Schmelzpunkt von etwa 45°C bis etwa 80°C aufweist.

In dem in Figur 3i gezeigten Ruhezustand des Aktors 1 sind der Heizwiderstand 19 sowie das Kühlelement 23 ausgeschaltet und das Verschlußmedium 21 liegt in einem festen Aggregatzustand vor, so daß die Aktorfluidzufuhrverbindung 9 fluiddicht bzw. druckdicht durch das Verschlußmedium 21 verschlossen ist und damit die Aktorkammer 11 fluidisch von der Aktorfluidzufuhr 7 getrennt ist. Da dem Aktor 1 keinerlei Energie zugeführt werden muß, um den Ruhezustand zu erhalten, kann dieser Ruhezustand als erster stabiler Zustand bezeichnet werden.

Wird das Heizelement 19 aktiviert bzw. eingeschaltet, so geht der Aktor 1 in den in Fig. 3ii gezeigten Zustand über, der solange aufrechterhalten wird, solange das Heizelement 19 eingeschaltet ist. Durch die durch das Heizelement 19 abgegebene thermische Energie wird das Verschlußmedium 21 auf eine Temperatur oberhalb der Schmelztemperatur, beispielsweise oberhalb 45°C oder etwa oberhalb 80°C, erwärmt, so daß das Verschlußmedium 21 in den flüssigen Aggregatzustand übergeht. Dadurch ist die Aktorkammer 11 nicht mehr mittels des Verschlußmediums 21 von der Aktorfluidzufuhr 7 druckdicht getrennt.

Durch Beaufschlagen des Aktorfluids 15 in der Aktorfluidzufuhr 7 mit einem Überdruck werden das Aktorfluid 15 und das Verschlußmedium 21 in Richtung der Aktorkammer 11 verlagert. Das Verschlußmedium 21 weist bevorzugt die gleiche Dichte auf, wie das umgebende Aktorfluid 7 bzw. das Aktorkammerfluid 17, um ein schwerkraftbedingtes Absinken des Verschlußmediums 21 oder ein Aufsteigen in die Aktorkammer 11 zu verhindern.

Durch Anlegen eines Überdrucks in der Aktorfluidzufuhr 7 wird auch ein Überdruck in der Aktorkammer 11, die jetzt über die Aktorfluidzufuhrverbindung 9 fluidisch mit der Aktorfluidzufuhr 7 verbunden ist, angelegt. Durch den Überdruck in der Aktorkammer 11 wird die Elastomermembran 13 verformt bzw. zumindest teilweise entlang einer Aktuationsrichtung A verlagert. Der Druck in der Aktorfluidzufuhr 7 kann beispielsweise mittels einer nicht gezeigten Aktorfluidquelle angelegt werden. Alternativ kann das in der Aktorfluidzufuhr 7 enthaltene Aktorfluid 5 auch mittels eines anderen Fluids mit dem Überdruck beaufschlagt werden. Beispielsweise kann ein inkompressibles Aktorfluid 15 in die Aktorfluidzufuhr 7 gefüllt sein, wie beispielsweise eine Flüssigkeit, z.B. Wasser oder aliphatische Kohlenwasserstoffe. Im wesentlichen können alle Flüssigkeiten als Aktorfluid 15 eingesetzt werden, deren Schmelzpunkte knapp unterhalb des Arbeitsbereichs (beispielsweise etwa 0°C) des Aktors liegen. Inkompressible Flüssigkeiten sind vorteilhafterweise volumeninvariant, so daß der in der Aktorfluidzufuhr 7 wirkende Überdruck keine Änderung des Aktorfluidvolumens bewirkt, wodurch vorteilhafterweise Wirkungsverluste durch das Komprimieren des Aktorfluids vermieden werden. Beispielsweise kann das Akorfluid 15 in der Aktorfluidzufuhr 7 pneumatisch mit einem Überdruck belegt werden. Insbesondere kann eine Druckluftquelle (nicht gezeigt) mit der Aktorfluidzufuhr 7 fluidisch verbunden sein, so daß das in der Aktorfluidzufuhr 7 enthaltene Aktorfluid 15 mittels der Druckluft mit einem Überdruck beaufschlagt wird. Der für das Aktuieren der Elastomermembran 13 als bevorzugte Ausführungsform eines Aktorelements benötigte Überdruck kann etwa 1 bar bis etwa 4 bar betragen, weiter bevorzugt kann der Überdruck etwa 2 bar bis etwa 3 bar betragen.

Nachdem das Aktorelement bzw. die Elastomermembran 13 entlang der Aktuationsrichtung A verformt wurde, wird das Heizelement 19 abgeschaltet, wie in Figur 3iii gezeigt, so daß das Verschußmedium 21 nicht weiter erwärmt wird. Zusätzlich kann das Verschlußmedium 21 mittels des Kühlelements 23 gekühlt werden. Ist das Verschlußmedium 21 unterhalb des Schmelzpunktes abgekühlt, so liegt das Verschlußmedium 21 wieder in festem Aggregatzustand vor. Dabei wird die Aktorfluidzufuhrverbindung 9 wieder druckdicht verschlossen. Nach dem Erstarren des Verschlußmediums 21 bzw. dem Verschließen der Aktorfluidzufuhrverbindung 9 ist ein weiteres Kühlen mittels des Kühlelements 23 nicht mehr notwendig.

Es wird der in Figur 3iv gezeigte Aktuationszustand des Aktors 1 erreicht, bei welchem das Aktorelement bzw. die Elastomermembran 13 aufgrund des in der

Aktorkammer 11 gehaltenen Überdrucks des Aktorkammerfluids 17 in der Aktuationsposition verlagert bzw. verformt bleibt. Da der Überdruck des Aktorkammerfluids 17 in der Aktorkammer 11 aufgrund des druckdichten Verschließens der Aktorfluidzufuhrverbindung 9 mittels des Verschlußmediums 21 von den Druckverhältnissen in der Aktorfluidzufuhr 7 unabhängig ist, kann der an die Aktorfluidzufuhr 7 angelegte Überdruck wieder abgelassen werden. Der Aktuationszustand kann deshalb auch als zweiter stabiler Zustand bezeichnet werden.

Ein Aktivieren des Heizelementes 19 (siehe Fig. 3v) führt zu einem Aufschmelzen des Verschlußmediums 21 in der Aktorfluidzufuhrverbindung 9, so daß der in der Aktorkammer 11 vorhandene Überdruck durch ein Verlagern des Verschlußmediums 21 zu einer von der Aktorkammer 11 weiter entfernten Position entweichen kann, wenn in der Aktorfluidzufuhr 7 kein Überdruck anliegt. Insbesondere kann der Druck in der Aktorfluidzufuhr 7 dem Umgebungsdruck des Aktors 1 entsprechen, welcher auch auf die Außenseite 13a der Elastomermembran 13 entgegen der Aktuationsrichtung A wirkt. Die Rückstellkraft der rückstellfähig elastisch verformbaren Elastomermembran 13 sorgt dann für ein Rückstellen der Elastomermembran und für ein Verlagern des Verschlußmediums 21, wie in Figur 3vi gezeigt. Sobald die Elastomermembran 13 in ihrer Ursprungsposition zurückgekehrt ist, kann das Heizelement 19 deaktiviert werden, so daß das Verschlußmedium 21 wieder erstarrt und die Aktorfluidzufuhrverbindung 9 druckdicht verschließt, so daß der Aktor 1 in die Ruheposition, wie in Figur 3i gezeigt, zurückkehrt. Da der Aktor 1, wie in der Figur 3 gezeigt, genau zwei stabile Zustände aufweist, nämlich den Ruhezustand und den Aktuationszustand, kann der Aktor 1 auch als bistabiler Aktor 1 bezeichnet werden.

Mit anderen Worten kann der in Figur 3 gezeigte bistabile Aktor 1 ein Verfahren durchführen, welches dem mit Bezug auf die Figur 1 beschriebenen Verfahren gleicht.

**Figur 4** zeigt eine weitere bevorzugte Ausführungsform des Aktors. Diese Ausführungsform entspricht im wesentlichen der in den Figuren 3i bis 3vi gezeigten Ausführungsform, wobei identische Bauelemente mit identischen Bezugszeichen gekennzeichnet sind und die Beschreibung zu den Figuren 3i bis 3vi ebenso für die in der Figur 4 gezeigten Ausführungsform gilt. Die in der Figur 4 gezeigte Ausführungsform des Aktors 1 weist ein Heizelement 19 auf, welches an der Innenwandung der Aktorfluidzufuhrverbindung 9 bzw. der Ausstülpung 3' angeordnet ist und das Verschlußmedium 21 unmittelbar kontaktiert. Insbesondere kann das Heizelement 19 als ein spiralförmig gewickelter Heizdraht ausgebildet sein.

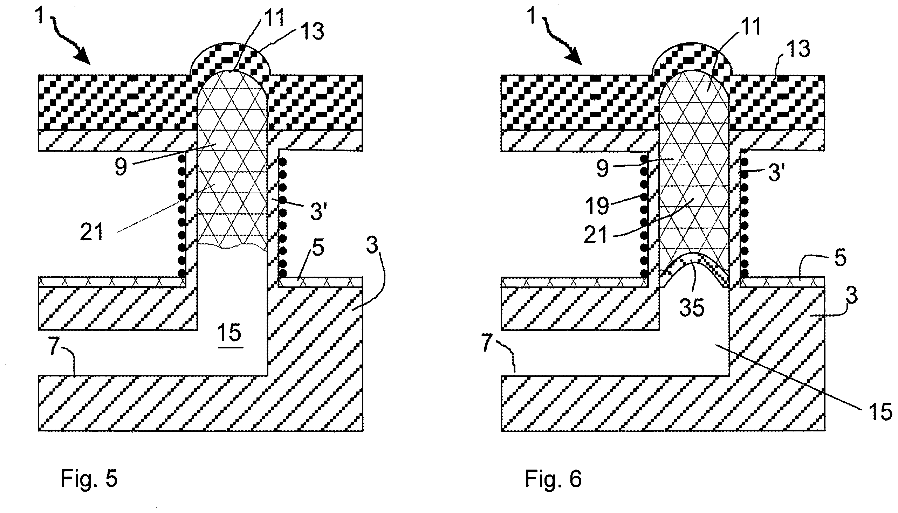

**Figur 5** zeigt eine weitere bevorzugte Ausführungsform des Aktors 1. Diese Ausführungsform entspricht im wesentlichen der in den Figuren 3i bis 3vi gezeigten Ausführungsform, wobei identische Bauelemente mit identischen Bezugszeichen gekennzeichnet sind und die Beschreibung zu den Figuren 3i bis 3vi ebenso für die in der Figur 5 gezeigten Ausführungsform gilt. Die in der Figur 5 gezeigte Ausführungsform des Aktors 1 weist Verschlußmedium 21 auf, welches nicht mit dem Aktorfluid 15 physikalisch vermischbar oder chemisch lösbar ist. Mit anderen Worten bildet sich zwischen dem Aktorfluid 15 und dem Verschlußmedium 21 eine stabile Phasengrenze aus. Beispielsweise kann das Verschlußmedium 21 ein Paraffin enthalten, während das Aktorfluid 15 ein polares Lösungsmittels, beispielsweise Wasser, umfaßt. Wie in der Figur 5 gezeigt, kann das Verschlußmedium abweichend von den in den Figuren 1 bis 4 gezeigten Ausführungsformen auch in die Aktorkammer 11 gelangen bzw. es kann auch die Rolle des Aktorkammerfluids übernehmen.

**Figur 6** zeigt eine weitere bevorzugte Ausführungsform des Aktors 1. Diese Ausführungsform entspricht im wesentlichen der in den Figuren 3i bis 3vi gezeigten Ausführungsform, wobei identische Bauelemente mit identischen Bezugszeichen gekennzeichnet sind und die Beschreibung zu den Figuren 3i bis 3vi ebenso für die in der Figur 6 gezeigten Ausführungsform gilt. Die in der Figur 6 gezeigte Ausführungsform des Aktors 1 weist Verschlußmedium 21 auf, welche durch eine elastische Membran 35 räumlich von dem Aktorfluid 15 getrennt ist. Mit anderen Worten bildet die elastische Membran eine fluiddichten Barriere zwischen der Aktorfluidzufuhr 7 und der Aktorfluidzufuhrverbindung 9 aus, so daß sich das Aktorfluid 15 und das Verschlußmedium 21 nicht unmittelbar kontaktieren und vermischen können. Durch die Elastizität der Membran 35 kann jedoch ein im Aktorfluid 15 herrschender Druck auf das Verschlußmedium übertragen werden. Für den Fall, daß das Aktorelement 13 verformt wird, kann sich die Membran 35 ebenfalls elastisch verformen, so daß das Volumen der Aktorkammer 11 und der Aktorfluidzufuhrverbindung 9 im wesentlichen konstant bleibt. Vorteilhafterweise können in dieser Ausführungsform Aktorfluide und Verschlußmedien verwendet werden, die bei direktem Kontakt miteinander mischbar bzw. lösbar sind.

### Bezugszeichenliste

- 1: Aktor
- 3: Volumenkörper
- 3': Ausstülpung des Volumenkörpers 3
- 5: planares Substrat, Leiterplatte
- 7: Aktorfluidzufuhr
- 9: Aktorfluidzufuhrverbindung
- 11: Aktorkammer
- 13: Elastomermembran, Aktorelement
- 13a: Oberfläche bzw. Außenfläche der Elastomermembran
- 15: Aktorfluid
- 17: Aktorkammerfluid
- 19: Heizelement
- 21: Verschlußmedium
- 23: Kühlelement, Peltier-Element
- 25: Reservoirfluidzufuhr
- 27: Reservoirfluidzufuhrverbindung
- 29: Zweite Elastomermembran
- 29a: Verschlußelement
- 29b: Druckübertragungselement
- 31: Zweiter Volumenkörper
- 33: Verschlußmediumreservoir
- 35: elastische Membran
- A: Aktuationsrichtung

## Patentansprüche

1. Verfahren zum bistabilen Aktuieren eines Aktors (1) umfassend die Schritte:
- Anlegen eines Überdrucks in einer Aktorfluidzufuhr (7), welche mittels einer Aktorfluidzufuhrverbindung (9) mit einer Aktorkammer (11) fluidisch verbunden ist, wobei ein Arbeitsüberdruck in der Aktorkammer (11) erzeugt wird, wodurch ein mit der Aktorkammer (11) fluidisch verbundenes Aktorelement (13) von einer Ruheposition in eine Aktuationsposition überführt wird;
- druckdichtes Verschließen der Aktorfluidzufuhrverbindung (9), so daß der Arbeitsüberdruck in der Aktorkammer (11) erhalten bleibt und das Aktorelement (13) in der Aktuationsposition verbleibt, **dadurch gekennzeichnet, dass** das druckdichte Verschließen mittels eines verflüssigbaren Verschlußmediums (21) erfolgt, welches in flüssigem Zustand in der Aktorfluidzufuhrverbindung (9) angeordnet ist und in der Aktorfluidzufuhrverbindung (9) erstarrt, wobei die Aktorkammer (11) von der Aktorfluidzufuhr (7) durch das erstarrte Verschlußmedium (21) fluidisch getrennt ist.

2. Verfahren nach Anspruch 1, weiter umfassend den Schritt:
- Verflüssigen des Verschlußmediums (21), welches in der Aktorfluidzufuhrverbindung (9) zwischen der Aktorkammer (11) und der Aktorfluidzufuhr (7) angeordnet ist und die Aktorkammer (11) von der Aktorfluidzufuhr (7) fluidisch trennt, wobei das verflüssigte Verschlußmedium (21) beim Anlegen des Überdrucks zumindest teilweise in Richtung der Aktorkammer (11) verlagert wird.

3. Verfahren nach einem der vorigen Ansprüche, weiter umfassend den Schritt:
- Ablassen des Überdrucks oder Anlegen eines Unterdrucks in der Aktorfluidzufuhr (7).

4. Verfahren nach Anspruch 3, weiter umfassend den Schritt:
- Verflüssigen des Verschlußmediums (21) in der Aktorfluidzufuhrverbindung (9), wobei der Arbeitsüberdruck in der Aktorkammer (11) sinkt und das Aktorelement (13) von der Aktuationsposition in die Ruheposition zurückkehrt.

5. Verfahren zum bistabilen Aktuieren eines Aktors (1) umfassend die Schritte:
- Anlegen eines Überdrucks in einer Aktorfluidzufuhr (7), welche mittels einer Aktorfluidzufuhrverbindung (9) mit einer Aktorkammer (11) fluidisch verbunden ist, wobei ein Arbeitsüberdruck in der Aktorkammer (11) erzeugt wird, wodurch ein mit der Aktorkammer (11) fluidisch verbundenes Aktorelement (13) von einer Ruheposition in eine Aktuationsposition überführt wird;
- druckdichtes Verschließen der Aktorfluidzufuhrverbindung (9), so daß der Arbeitsüberdruck in der Aktorkammer (11) erhalten bleibt und das Aktorelement (13) in der Aktuationsposition verbleibt, **dadurch gekennzeichnet, dass** das druckdichte Verschließen umfasst:
-- Verflüssigen eines verflüssigbaren Verschlußmediums (21) in einem Verschlußmediumreservoir (33);
-- Beaufschlagen des Verschlußmediumreservoirs (33) mit einem Überdruck, wobei ein Verschlußelement (29a) von einer Offenposition in eine Geschlossenposition überführt wird, so daß die Aktorkammer (11) von der Aktorfluidzufuhr (7) von dem Verschlußelement (29a) fluidisch getrennt wird; und
-- Erstarren des Verschlußmediums (21), so daß das Verschlußelement (29a) in der Geschlossenposition verbleibt.

6. Bistabiler Aktor (1) umfassend:
- eine Aktorfluidzufuhr (7), durch welche ein Aktorfluid (15) bereitstellbar ist und welche mittels einer Aktorfluidzufuhrverbindung (9) mit einer Aktorkammer (11) fluidisch verbunden ist;
- zumindest ein mit der Aktorkammer (11) fluidisch verbundenes Aktorelement (13), welches durch Anlegen eines Uberdrucks in der Aktorkammer (11) von einer Ruheposition in eine Aktuationsposition überführbar ist;
- eine Verschlußvorrichtung (19, 21; 21, 29a, 33), mit welcher die Aktorfluidzufuhrverbindung (9) druckdicht verschließbar ist, **dadurch gekennzeichnet, dass** die Verschlußvorrichtung (19, 21) ein verflüssigbares Verschlußmedium (21) und ein Heizelement (19), mit welchem das Verschlußmedium (21) verflüssigbar ist, umfaßt, wobei:
das verflüssigbare Verschlußmedium (21) in der Aktorfluidzufuhrverbindung (9) angeordnet ist; oder
das verflüssigbare Verschlußmedium (21) in einem Verschlußmediumreservoir (33) des Aktors (1) angeordnet ist, wobei das Verschlußmediumreservoir (33) fluidisch mit einem Verschlußelement (29a) verbunden ist, welches durch Anlegen eines Überdrucks im Verschlußmediumreservoir (33) von einer Offenposition in eine Geschlossenposition überführbar ist, so daß die Aktorkammer (11) von der Aktorfluidzufuhr (7) durch das Verschlußelement (29a) fluidisch trennbar ist.

7. Aktor (1) gemäß Anspruch 6, wobei das verflüssigbare Verschlußmedium (21) in der Aktorfluidzufuhrverbindung (9) angeordnet ist, wobei das Verschlußmedium (21) mit dem Aktorfluid (15) unmischbar ist oder wobei das Verschlußmedium (21) vom dem Aktorfluid (15) durch eine elastische Membran (35) fluidisch getrennt ist.

8. Aktor (1) gemäß Anspruch 6 oder 7, wobei das Heizelement (19) das Verschlußmedium (19) unmittelbar oder mittelbar kontaktiert.

9. Aktor (1) gemäß einem der Ansprüche 6 bis 8, wobei das Verschlußmedium (21) in dem Verschlußmediumreservoir (33) angeordnet ist und der Aktor (1) eine Reservoirfluidzufuhr (25) aufweist, welche mittels einer Reservoirfluidzufuhrverbindung (27) mit dem Verschlußmediumreservoir (33) fluidisch verbunden ist.

10. Aktoranordnung mit zumindest zwei Aktoren (1) gemäß einem der Ansprüche 6 bis 9, wobei die Aktorfluidzufuhren (7) der Aktoren (1) und/oder die Reservoirfluidzufuhren (25) der Aktoren (1) fluidisch miteinander verbunden sind.

11. Verwendung einer Aktoranordnung gemäß Anspruch 10 als haptische Anzeigevorrichtung, wobei mittels der Aktorelemente (13) der Aktoranordnung eine Vielzahl von ertastbaren Zeichen darstellbar ist.

## Claims

1. A method for the bistable actuation of an actuator (1) comprising the steps of:
- applying a positive pressure in a actuator fluid supply (7), which is fluidically connected to an actuator chamber (11) by means of an actuator fluid supply connection (9), wherein a working positive pressure is generated in the actuator chamber (11), as a result of which an actuator element (13) fluidically connected to the actuator chamber (11) is moved from a rest position into an actuation position;
- sealing the actuator fluid supply connection (9) in a pressure-tight manner such that the working positive pressure in the actuator chamber (11) is maintained and the actuator element (13) remains in the actuation position, **characterized in that** the pressure-tight sealing takes place by means of a liquefiable sealing medium (21), which is arranged in the actuator fluid supply connection (9) in the liquid state and solidifies in the actuator fluid supply connection (9), wherein the actuator chamber (11) is fluidically separated from the actuator fluid supply (7) by means of the solidified sealing medium (21).

2. The method according to claim 1, further comprising the step of:
- liquefying the sealing medium (21), which is arranged in the actuator fluid supply connection (9) between the actuator chamber (11) and the actuator fluid supply (7) and fluidically separates the actuator chamber (11) from the actuator fluid supply (7), wherein the liquefied sealing medium (21) is moved at least in part toward the actuator chamber (11) when the positive pressure is applied.

3. The method according to any one of the preceding claims, further comprising the step of:
- releasing the positive pressure or applying a negative pressure in the actuator fluid supply (7).

4. The method according to claim 3, further comprising the step of:
- liquefying the sealing medium (21) in the actuator fluid supply connection (9), wherein the working positive pressure in the actuator chamber (11) falls and the actuator element (13) returns from the actuation position into the rest position.

5. A method for the bistable actuation of an actuator (1) comprising the steps of:
- applying a positive pressure in an actuator fluid supply (7), which is fluidically connected to an actuator chamber (11) by means of an actuator fluid supply connection (9), wherein a working positive pressure is generated in the actuator chamber (11), as a result of which an actuator element (13) fluidically connected to the actuator chamber (11) is moved from a rest position into an actuation position;
- sealing the actuator fluid supply connection (9) in a pressure-tight manner such that the working positive pressure in the actuator chamber (11) is maintained and the actuator element (13) remains in the actuation position, **characterized in that** the pressure-tight sealing comprises:
- liquefying a liquefiable sealing medium (21) in a sealing medium reservoir (33);
- applying a positive pressure to the sealing medium reservoir (33), wherein a sealing element (29a) is moved from an open position into a closed position such that the actuator chamber (11) is fluidically separated from the actuator fluid supply (7) by the sealing element (29a); and
- solidifying the sealing medium (21) such that the sealing element (29a) remains in the closed position.

6. A bistable actuator (1) comprising:
- an actuator fluid supply (7), by means of which an actuator fluid (15) can be provided and which is fluidically connected to an actuator chamber (11) by means of an actuator fluid supply connection (9);
- at least one actuator element (13), which is fluidically connected to the actuator chamber (11) and which can be moved from a rest position into an actuation position by applying a positive pressure in the actuator chamber (11);
- a sealing device (19, 21; 21, 29a, 33), by means of which the actuator fluid supply connection (9) can be sealed in a pressure-tight manner, **characterized in that** the sealing device (19, 21) comprises a liquefiable sealing medium (21) and a heating element (19), by means of which the sealing medium (21) can be liquefied, wherein:
the liquefiable sealing medium (21) is arranged in the actuator fluid supply connection (9); or
the liquefiable sealing medium (21) is arranged in a sealing medium reservoir (33) of the actuator (1), wherein the sealing medium reservoir (33) is fluidically connected to a sealing element (29a), which can be moved from an open position into a closed position by applying a positive pressure in the sealing medium reservoir (33) such that the actuator chamber (11) can be fluidically separated from the actuator fluid supply (7) by means of the sealing element (29a).

7. The actuator (1) according to claim 6, wherein the liquefiable sealing medium (21) is arranged in the actuator fluid supply connection (9), wherein the sealing medium (21) cannot be mixed with the actuator fluid (15) or wherein the sealing medium (21) is fluidically separated from the actuator fluid (15) by means of a resilient membrane (35).

8. The actuator (1) according to claim 6 or 7, wherein the heating element (19) directly or indirectly contacts the sealing medium (19).

9. The actuator (1) according to any one of claims 6 to 8, wherein the sealing medium (21) is arranged in the sealing medium reservoir (33) and the actuator (1) comprises a reservoir fluid supply (25), which is fluidically connected to the sealing medium reservoir (33) by means of a reservoir fluid supply connection (27).

10. An actuator assembly comprising at least two actuators (1) according to any one of claims 6 to 9, wherein the actuator fluid supplies (7) of the actuators (1) and/or the reservoir fluid supplies (25) of the actuators (1) are fluidically interconnected.

11. A use of an actuator assembly according to claim 10 as a haptic display device, wherein a plurality of tactile symbols can be displayed by means of the actuator elements (13) of the actuator assembly.

## Revendications

1. Méthode d'actionnement bistable d'un actionneur (1) comprenant les étapes suivantes:
- l'application d'une surpression dans une amenée de fluide d'actionneur (7), laquelle est reliée à une chambre d'actionneur (11) par connexion fluidique au moyen d'un raccord d'amenée de fluide d'actionneur (9), dans laquelle une surpression de travail est générée dans la chambre d'actionneur (11), moyennant quoi un élément d'actionneur (13) relié à la chambre d'actionneur (11) par connexion fluidique est transféré d'une position de repos vers une position d'actionnement ;
- la fermeture étanche à la pression du raccord d'amenée de fluide d'actionneur (9), de sorte que la surpression de travail est maintenue dans la chambre d'actionneur (11) et que l'élément d'actionneur (13) reste dans la position d'actionnement,
**caractérisée en ce que**
- la fermeture étanche à la pression s'effectue au moyen d'un milieu de fermeture liquéfiable (21), lequel est disposé à l'état liquide dans le raccord d'amenée de fluide d'actionneur (9) et se solidifie dans le raccord d'amenée de fluide d'actionneur (9), dans laquelle la chambre d'actionneur (11) est séparée de l'amenée de fluide d'actionneur (7) par connexion fluidique au moyen du milieu de fermeture solidifié (21).

2. Méthode selon la revendication 1, comprenant encore l'étape suivante :
- la liquéfaction du milieu de fermeture (21), lequel est disposé dans le raccord d'amenée de fluide d'actionneur (9) entre la chambre d'actionneur (11) et l'amenée de fluide d'actionneur (7) et lequel sépare la chambre d'actionneur (11) de l'amenée de fluide d'actionneur (7) par connexion fluidique, dans laquelle le milieu de fermeture liquéfié (21) est déplacé au moins en partie en direction de la chambre d'actionneur (11) lors de l'application de la surpression.

3. Méthode selon l'une des revendications précédentes, comprenant encore l'étape suivante :
- le relâchement de la surpression ou l'application d'une dépression dans l'amenée de fluide d'actionneur (7).

4. Méthode selon la revendication 3, comprenant encore l'étape suivante :
- la liquéfaction du milieu de fermeture (21) dans le raccord d'amenée de fluide d'actionneur (9), dans laquelle la surpression de travail baisse dans la chambre d'actionneur (11) et l'élément d'actionneur (13) revient de la position d'actionnement dans la position de repos.

5. Méthode d'actionnement bistable d'un actionneur (1) comprenant les étapes suivantes :
- l'application d'une surpression dans une amenée de fluide d'actionneur (7), laquelle est reliée à une chambre d'actionneur (11) par connexion fluidique au moyen d'un raccord d'amenée de fluide d'actionneur (9), dans laquelle une surpression de travail est générée dans la chambre d'actionneur (11), moyennant quoi un élément d'actionneur (13) relié à la chambre d'actionneur (11) par connexion fluidique est transféré d'une position de repos vers une position d'actionnement ;
- la fermeture étanche à la pression du raccord d'amenée de fluide d'actionneur (9), de sorte que la surpression de travail est maintenue dans la chambre d'actionneur (11) et que l'élément d'actionneur (13) reste dans la position d'actionnement,
**caractérisée en ce que**
la fermeture étanche à la pression comprend :
- la liquéfaction d'un milieu de fermeture liquéfiable (21) dans un réservoir de milieu de fermeture (33) ;
- la mise en surpression du réservoir de milieu de fermeture (33), dans laquelle un élément de fermeture (29a) est transféré d'une position ouverte vers une position fermée, de sorte que la chambre d'actionneur (11) est séparée de l'amenée de fluide d'actionneur (7) par connexion fluidique au moyen de l'élément de fermeture (29a) ; et
- la solidification du milieu de fermeture liquéfiable (21), de sorte que l'élément de fermeture (29a) reste dans la position fermée.

6. Actionneur bistable (1) comprenant :
- une amenée de fluide d'actionneur (7), laquelle permet de fournir un fluide d'actionneur (15) et est reliée à une chambre d'actionneur (11) par connexion fluidique au moyen d'un raccord d'amenée de fluide d'actionneur (9) ;
- au moins un élément d'actionneur (13) relié à la chambre d'actionneur (11) par connexion fluidique, lequel peut être transféré d'une position de repos vers une position d'actionnement moyennant l'application d'une surpression dans la chambre d'actionneur (11) ;
- un dispositif de fermeture (19, 21 ; 21, 29a, 33), lequel permet de fermer le raccord d'amenée de fluide d'actionneur (9) de manière étanche à la pression,
**caractérisé en ce que**
le dispositif de fermeture (19, 21) comprend un milieu de fermeture liquéfiable (21) et un élément de chauffage (19), lequel permet de liquéfier le milieu de fermeture (21), dans lequel :
le milieu de fermeture liquéfiable (21) est disposé dans le raccord d'amenée de fluide d'actionneur (9) ; ou
le milieu de fermeture liquéfiable (21) est disposé dans un réservoir de milieu de fermeture (33) de l'actionneur (1), dans lequel le réservoir de milieu de fermeture (33) est relié à un élément de fermeture (29a) par connexion fluidique, lequel peut être transféré d'une position ouverte vers une position fermée moyennant l'application d'une surpression dans le réservoir de milieu de fermeture (33), de sorte que la chambre d'actionneur (11) peut être séparée de l'amenée de fluide d'actionneur (7) par connexion fluidique moyennant l'élément de fermeture (29a).

7. Actionneur (1) selon la revendication 6, dans lequel le milieu de fermeture liquéfiable (21) est disposé dans le raccord d'amenée de fluide d'actionneur (9), dans lequel le milieu de fermeture (21) n'est pas miscible au fluide d'actionneur (15) ou dans lequel le milieu de fermeture (21) est séparé du fluide d'actionneur (15) par connexion fluidique moyennant une membrane élastique (35).

8. Actionneur (1) selon la revendication 6 ou 7, dans lequel l'élément de chauffage (19) est en contact direct ou indirect avec le milieu de fermeture (19).

9. Actionneur (1) selon l'une des revendications 6 à 8, dans lequel le milieu de fermeture (21) est disposé dans le réservoir de milieu de fermeture (33) et l'actionneur (1) présente une amenée de fluide de réservoir (25), laquelle est reliée au réservoir de milieu de fermeture (33) par connexion fluidique au moyen d'un raccord d'amenée de fluide de réservoir (27).

10. Ensemble d'actionneurs avec au moins deux actionneurs (1) selon l'une des revendications 6 à 9, dans lequel les amenées de fluide (7) des actionneurs (1) et / ou les amenées de fluide de réservoir (25) des actionneurs (1) sont reliées les unes aux autres par connexion fluidique.

11. Utilisation d'un ensemble d'actionneurs selon la revendication 10 servant de dispositif d'affichage haptique, dans laquelle des caractères tactiles peuvent être représentés au moyen des éléments d'actionneur (13) de l'ensemble d'actionneurs.
